# FASCICULE DE BREVET EUROPEEN

(11) **EP 2 142 295 B1**
(45) Date de publication et mention de la délivrance du brevet: **11.03.2020**
(21) Numéro de dépôt: 08761825.2
(22) Date de dépôt: 31.01.2008
(51) Int. Cl.: B01J 23/745, C02F 3/34, C01G 49/02, B01J 23/00, C02F 1/70

(54) **UTILISATION D'UN CATALYSEUR A BASE DE FER POUR LA MISE EN UVRE D'UN PROCEDE D'OXYDOREDUCTION DE SUBSTANCES A REDUIRE**
VERWENDUNG EINES EISENBASIERTEN KATALYSATORS ZUR ANWENDUNG EINES OXIDIERUNGSREDUKTIONSVERFAHRENS FÜR ZU REDUZIERENDE SUBSTANZEN
USE OF IRON BASED CATALYST FOR IMPLEMENTING OXIDATION-REDUCTION METHOD FOR SUBSTANCES TO BE REDUCED

(30) Priorité: 31.01.2007 WO PCT/FR2007/000178
(43) Date de publication de la demande: 13.01.2010
(73) Titulaire: Université de Lorraine, 54052 Nancy Cedex (FR)
(72) Inventeur: GENIN, Jean-Marie, F-54290 Neuviller sur Mozelle (FR); RUBY, Christian, F-54510 Tomblaine (FR)
(74) Mandataire: Grosset-Fournier, Chantal Catherine
(86) Numéro de dépôt international: PCT/FR2008/000117
(87) Numéro de publication internationale: WO 2008/110689

(56) Documents cités:
- WO-A-2004/018094
- RUBY CHRISTIAN ET AL: "In situ redox flexibility of Fe<II-III> oxyhydroxycarbonate green rust and fougerite" ENVIRON. SCI. TECHNOL.; ENVIRONMENTAL SCIENCE AND TECHNOLOGY AUG 1 2006, vol. 40, no. 15, 1 août 2006 (2006-08-01), pages 4696-4702, XP002454437
- GENIN J M R ET AL: "Fougerite and Fe<II-III> hydroxycarbonate green rust; ordering, deprotonation and/or cation substitution; structure of hydrotalcite-like compounds and mythic ferrosic hydroxide Fe(OH)(2+x)" SOLID STATE SCIENCES, ELSEVIER, PARIS, FR, vol. 7, no. 5, 1 mai 2005 (2005-05-01), pages 545-572, XP004878605 ISSN: 1293-2558
- GENIN ET AL: "Speciation of iron" COMPTES RENDUS - GEOSCIENCE, ELSEVIER, PARIS, FR, vol. 338, no. 6-7, juin 2006 (2006-06), pages 402-419, XP005515887 ISSN: 1631-0713 cité dans la demande
- RUBY ET AL: "Green rusts synthesis by coprecipitation of Fe<II>-Fe<III> ions and mass-balance diagram" COMPTES RENDUS - GEOSCIENCE, ELSEVIER, PARIS, FR, vol. 338, no. 6-7, juin 2006 (2006-06), pages 420-432, XP005515888 ISSN: 1631-0713 cité dans la demande
- Georges Ona-Nguema ET AL: "Iron(II,III) Hydroxycarbonate Green Rust Formation and Stabilization from Lepidocrocite Bioreduction", Environmental Science & Technology, vol. 36, no. 1, 28 November 2001 (2001-11-28), pages 16-20, XP055439440, US ISSN: 0013-936X, DOI: 10.1021/es0020456
- C J Ottley ET AL: "Chemical catalysis of nitrate reduction by iron(II)", Geochimica et Cosmochimica Acta, Vol. 61, No. 9, 1 January 1997 (1997-01-01), pages 1819-1828, XP055564037, DOI: 10.1016/S0016-7037(97)00058-6 Retrieved from the Internet: URL:https://ac.els-cdn.com/S00167037970005 86/1-s2.0-S0016703797000586-main.pdf?_tid= 16cfdb08-ba2c-4ced-a620-d47f492f18e2&acdna t=1551693349_60590880f4e6ba2981d41da8923ba f87 [retrieved on 2019-03-04]

## Description

L'invention a pour objet l'utilisation d'un nouveau catalyseur à base de fer pour la mise en œuvre d'un procédé d'oxydoréduction de substances à réduire en présence de bactéries.

Les oxyhydroxysels ferreux ferriques sont des composés intermédiaires au cours de la dégradation des matériaux ferreux qui se transforment ultimement en rouille et portent ainsi couramment le nom de rouilles vertes en raison de leur couleur.

Ona Nguema et al., 2002, Enviro. Sci.Technol., ont décrit *in vitro* la formation de rouilles vertes par les bactéries ferri-réductrices dissimilatrices *Shewanella putrefaciens* en présence de méthanoate (HCO₂⁻) comme donneur d'électrons et de lépidocrocite, l'oxyhydroxyde ferrique γ-FeOOH, comme accepteur d'électrons, source de fer. L'activité bactérienne consiste ainsi à réduire les ions Fe^{III} en Fe^{II} tout en oxydant la matière organique en carbonate CO₃²⁻, ce qui permet alors à la rouille verte dite carbonatée de se former.

Par ailleurs, des bactéries peuvent réduire, à titre d'exemple, des nitrates et ceci de deux façons : directement ou indirectement.

Les bactéries ferri-réductrices permettent la réduction de Fe^{III} en Fe^{II}, le Fe^{III} jouant le rôle d'accepteur final d'électrons lors de la respiration bactérienne au cours de laquelle la matière organique s'oxyde.

A titre d'exemple, les eaux de fosse septique sont souvent rejetées directement dans la nature sans traitement, plus particulièrement dans le cas d'un habitat dispersé ; il en est pratiquement toujours de même pour les lisiers d'élevage animal qu'on épand dans les champs afin d'utiliser les nitrates qu'ils contiennent comme engrais. Le problème est que la quantité de nitrates contenue par les lisiers d'une exploitation agricole dépasse souvent largement les besoins culturaux de l'exploitation. La quantité excédentaire de nitrate contenue dans le lisier qui n'est pas consommée part inéluctablement par lessivage dans les nappes aquifères et contribue ainsi à la pollution diffuse.

La présente description décrit l'utilisation d'un catalyseur à base de fer pour la mise en œuvre d'un procédé d'oxydoréduction.

La présente invention a également pour objet un procédé permettant la dépollution d'un milieu à traiter.

Un autre objet de de la description est de fournir un produit nouveau permettant la mise en œuvre d'un procédé de dépollution d'un milieu à traiter.

La présente description concerne l'utilisation d'au moins un hydroxyde double lamellaire (HDL) comme catalyseur ou comme précurseur dudit catalyseur, de même structure cristalline que celle dudit catalyseur, pour la mise en œuvre d'un procédé d'oxydoréduction, ledit HDL comportant un cation bivalent M²⁺ partiellement ou totalement substitué par Fe^{II}, et un cation trivalent T³⁺ éventuellement substitué par Fe^{III}, de formule générale suivante :

[M²⁺_{(z)}Fe^{II}_{(1-y-z)}T³⁺ₜFe^{III}_{(y-t)}O₂H₂]ⁿ⁺[(y/n)Aⁿ⁻ mH₂O]ⁿ⁻,

dans laquelle :
1/4 <y<1/3, z<1-y et t<y, Aⁿ⁻ est un anion de charge n, n prenant les valeurs 1, 2 ou 3, notamment 2, m est un nombre entier variant de 1 à 10, notamment de 1 à 4, avantageusement 3,
et le rapport x = (y-t)/(1-z-t) pouvant varier de 0 à 1,
ledit HDL étant utilisé en association avec des bactéries ferri-réductrices susceptibles de réduire Fe^{III} en Fe^{II} et en présence de matière organique, et étant susceptible de se déprotonner pour conduire à la formule suivante :

   [M²⁺_{(z)}Fe^{II}_{(1-y-z-w)}T³⁺ₜFe^{III}_{(y-t+w)}O₂H_{2-w}]ⁿ⁺[(y/n)Aⁿ⁻,mH₂O]ⁿ⁻,

   dans laquelle :
   A, y, z, m et n sont tels que ci-dessus,
   w correspond au taux de déprotonation des ions OH⁻,
   et le rapport x = (y-t+w)/(1-z-t) pouvanr varier de 0 à 1,
   pour réduire une substance S en une substance S_{réduit}, le potentiel rédox du couple S_{réduit} /S étant supérieur à celui du couple Fe^{II}/Fe^{III} aux sites cristallographiques de Fe^{II},
   x variant essentiellement dans la gamme allant de 0,33 à 0,66 après la mise en régime du procédé d'oxydoréduction, et sans modification substantielle de la structure cristalline du susdit HDL.

Les HDL sont des composés lamellaires qui présentent une grande anisotropie de leurs liaisons chimiques, fortes au sein des feuillets hydroxylés, plus faibles pour la cohésion entre les feuillets. Cette caractéristique permet d'intercaler une grande variété d'espèces chimiques, tant inorganiques qu'organiques voire biologiques qui permettent de modifier la réactivité du matériau.

Le terme « catalyseur » signifie ici que l'HDL participe chimiquement au procédé d'oxydoréduction, et est régénéré au cours du procédé, grâce à l'activité bactérienne.

Par « catalyseur », on entend un catalyseur fonctionnel.

Par « précurseur de même structure cristalline », on désigne un HDL de même structure cristalline que celle du catalyseur et où la seule différence réside dans la protonation ou déprotonation des ions OH⁻.

Le catalyseur a la formule [M²⁺_{(z)}Fe^{II}_{(1-y-z)}T³⁺ₜFe^{III}_{(y-t)}O₂H₂]ⁿ⁺[(y/n)Aⁿ⁻,mH₂O]ⁿ⁻, dans laquelle de x varie de 0,33 à 0,66 et le précurseur a la même formule dans laquelle x peut être inférieur à 0,33 ou supérieur à 0,66, x pouvant atteindre les valeurs de 0 et 1.

La phase de mise en régime du procédé d'oxydoréduction permet d'obtenir le catalyseur fonctionnel à partir de son précurseur qui possède alors la formule suivante :

[M²⁺_{(z)}Fe^{II}_{(1-y-z-w)}T³⁺ₜFe^{III}_{(y-t+w)}O₂H_{2-w}]ⁿ⁺[(y/n)Aⁿ⁻,mH₂O]ⁿ⁻,

Les Inventeurs ont montré que l'HDL tel que défini ci-dessus peut servir de catalyseur dans des procédés d'oxydoréduction afin de réduire une substance S et que les bactéries ferri-réductrices sont effectivement des bactéries qui permettent ainsi de réduire indirectement les nitrates.

Par « 0,33 », on désigne la valeur exacte 1/3.

Par « 0,66 », on désigne la valeur exacte 2/3.

La valeur de x au sein de l'HDL correspond au rapport Fe^{III}/(Fe^{II} + Fe^{III}) et peut être mesurée directement *in situ* par spectrométrie Mössbauer.

L'expression « structure cristalline » signifie que ledit HDL est sous la forme d'un solide prismatique à base hexagonale à structure régulière et périodique, formée d'un empilement ordonné d'atomes, molécules ou ions, selon les lois de périodicité de translation appelée réseau de Bravais.

Le passage du solide de x = 0,33 à x = 1 peut s'obtenir de façon continue par oxydation progressive dans des conditions d'oxydation vive telles qu'on les obtient par l'eau oxygénée H₂O₂. Il s'agit d'un phénomène de déprotonation interne au composé, au cours duquel certains ions OH- deviennent O²⁻, transformant corrélativement des ions Fe^{II} en Fe^{III}.

La substance S selon l'invention désigne toute substance susceptible d'être réduite en une substance S_{réduit} et qui correspond a un couple S_{réduit} /S dont le potentiel rédox est impérativement supérieur à celui du couple Fe^{II}/Fe^{III} aux sites cristallographiques de Fe^{II}.

La substance S est notamment présente dans un milieu liquide. Un tel milieu liquide est plus ou moins chargé en matière organique.

Par « procédé d'oxydoréduction », on désigne un procédé qui fait intervenir au moins deux réactions: une réaction d'oxydation et une réaction de réduction, qui impliquent un transfert d'électrons par émission et réception, respectivement.

La substance S est mise en présence de l'HDL à l'instant d'initialisation du procédé ou pendant l'activation du catalyseur ou après la mise en régime du catalyseur.

Par « matière organique », on désigne toute matière carbonée provenant ou non d'organismes vivants (animaux ou végétaux) qui sert de nutriments aux bactéries.

Cette matière organique peut être d'origine naturelle, telle que acides humiques, compost ou d'origine artificielle, telle que acétate ou méthanoate.

Les bactéries que l'on qualifie de ferri-réductrices utilisées dans le cadre de l'invention sont susceptibles de réduire Fe^{III} en Fe^{II}. Cette réduction est rendue possible par la respiration des bactéries au cours de laquelle la matière organique s'oxyde et où l'accepteur final d'électrons est Fe^{III}. L'oxydation de la matière organique selon l'invention est une oxydation catalytique enzymatique.

Les bactéries peuvent provenir de la flore bactérienne du sol dans l'humus ou du compost ajoutés comme source de matière organique, voire d'un inoculum de bactéries. L'inoculum de bactéries peut provenir de bactéries cultivées *in vitro,* sous forme lyophilisée ou congelée.

La valeur de x varie au cours du procédé d'oxydo-réduction, et de manière inédite, cette variation de x se fait *in situ,* n'entraînant pas de modification substantielle de la structure de l'HDL. De fait, la réduction bactérienne peut se faire sans qu'il y ait dissolution du précurseur ferrique suivie d'une reprécipitation de l'HDL.

L'expression « sans modification substantielle de sa structure» signifie que le réseau cristallin n'est pas modifié. En effet, une légère contraction locale du réseau cristallin inférieure à 5% accompagne la déprotonation, de sorte que la morphologie du cristal et sa disposition spatiale reste inchangées. Seuls certains ions OH⁻ entourant les cations de fer peuvent perdre *in situ* un proton H⁺, et devenir des ions O²⁻, entraînant corrélativement la transformation d'un ion Fe^{II} en ion Fe^{III}.

La description concerne notamment l'utilisation d'un HDL telle que définie ci-dessus, dans lequel la proportion de Fe^{II} substituant l'élément bivalent est comprise de d'environ 1% (m/m) à 100% (m/m) par rapport à la quantité totale d'élément bivalent.

L'HDL nécessite pour fonctionner la présence d'une proportion minimale de Fe^{II} de 1% permettant la transformation d'un ion Fe^{II} en ion Fe^{III}. Si l'HDL ne comporte pas de Fe^{II}, celui-ci est alors non fonctionnel.

La description décrit plus particulièrement l'utilisation d'un HDL telle que définie ci-dessus, dans lequel la proportion de Fe^{III} dans l'élément trivalent est comprise de 0 % (m/m) à 100% (m/m) par rapport à la quantité totale d'élément trivalent.

La présence de Fe^{III} n'est pas indispensable à partir du moment où du Fe^{II} susceptible de se transformer en Fe^{III} est présent dans l'HDL.

La description décrit également l'utilisation d'un HDL telle que définie ci-dessus, dans laquelle M²⁺ est choisi parmi Mg²⁺, Ni²⁺, Ca²⁺, Mn²⁺ et T³⁺ est choisi parmi Al³⁺ et Cr³⁺.

La présente description concerne plus particulièrement l'utilisation d'un HDL telle que définie ci-dessus, sous forme d'un oxyhydroxysel ferreux ferrique comme catalyseur ou comme précurseur dudit catalyseur, de même structure cristalline que celle dudit catalyseur, pour la mise en œuvre d'un procédé d'oxydoréduction, ledit oxyhydroxysel ferreux ferrique ayant la formule

[Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻,

dans laquelle Aⁿ⁻ est un anion de charge n, n prenant les valeurs 1, 2 ou 3, notamment 2, m est un nombre entier variant de 1 à 10, notamment de 1 à 4, avantageusement 3, et x est compris de 0 à 1,
ledit oxyhydroxysel ferreux ferrique étant utilisé en association avec des bactéries ferri-réductrices susceptibles de réduire Fe^{III} en Fe^{II} et en présence de matière organique,
pour réduire une substance S en une substance S_{réduit}, le potentiel rédox du couple S_{réduit} /S étant supérieur à celui du couple Fe^{II}/Fe^{III} aux sites cristallographiques de Fe^{II}, x variant essentiellement dans la gamme allant de 0,33 à 0,66, après la mise en régime du procédé d'oxydoréduction, sans modification substantielle de la structure cristalline du susdit oxyhydroxysel ferreux ferrique.

Le terme « catalyseur » signifie ici que l'oxyhydroxysel ferreux ferrique participe chimiquement au procédé d'oxydoréduction, et est régénéré au cours du procédé, grâce à l'activité bactérienne. Par « catalyseur », on entend un catalyseur fonctionnel.

Par « précurseur de même structure cristalline », on désigne un oxyhydroxysel ferreux ferrique de même structure cristalline que celle du catalyseur.

Le catalyseur a la formule [Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻, dans laquelle de x varie de 0,33 à 0,66 et le précurseur a la même formule dans laquelle x peut être inférieur à 0,33 ou supérieur à 0,66, x pouvant atteindre les valeurs de 0 à 1.

La phase de mise en régime du procédé d'oxydoréduction permet d'obtenir le catalyseur fonctionnel à partir de son précurseur.

Les Inventeurs ont montré que l'oxyhydroxysel ferreux ferrique tel que défini ci-dessus peut servir de catalyseur dans des procédés d'oxydoréduction afin de réduire une substance S et que les bactéries ferri-réductrices sont effectivement des bactéries qui permettent ainsi de réduire indirectement les nitrates.

Les hydroxysels ferreux ferriques appartiennent à la famille des hydroxydes doubles lamellaires qui comportent des feuillets cationiques comprenant les ions Fe^{II} et Fe^{III} de structure Fe(OH)₂, dits brucitiques, et des interfeuillets comprenant anions et molécules d'eau qui contrebalancent l'excès de charges positives dû aux ions Fe^{III}.

Les oxyhydroxysels ferreux ferriques ont quant à eux une structure cristallographique similaire à celle des hydroxysels afférents, mais certains de leurs ions OH⁻ qui entourent chaque cation Fe^{III} sont déprotonnés en devenant des ions O²⁻. Des ions Fe^{II} s'oxydent en Fe^{III} pour compenser la charge.

Les oxyhydroxysels ferreux ferriques utilisés dans le cadre de l'invention peuvent être d'origine naturelle ou de synthèse.

Les oxyhydroxysels ferreux ferriques observés à l'état naturel dans les sols sont présents uniquement dans un domaine de x compris entre 0,33 et 0,66. C'est le minéral fougérite. Les produits de synthèse correspondent par contre à des valeurs de x variant de 0 à 1, grâce à des propriétés électroniques appropriées inédites.

La valeur de x au sein de l'oxyhydroxysel ferreux ferrique correspond au rapport Fe^{III}/(Fe^{II} + Fe^{III}) et peut être mesurée directement *in situ* par spectrométrie Mössbauer.

La structure cristallographique des oxyhydroxysels ferreux ferriques, et plus particulièrement celle de l'oxyhydroxycarbonate, a été décrite en détails par Génin et al. (CR Geoscience, 2006 ; Solid State Sciences, 2006).

L'expression « structure cristalline » signifie que ledit oxyhydroxysel ferreux ferrique est sous la forme d'un solide prismatique à base hexagonale à structure régulière et périodique, formée d'un empilement ordonné d'atomes, molécules ou ions, selon les lois de périodicité de translation appelée réseau de Bravais et dont la distribution spatiale a été précisée (Génin et al., 2006, Solid State Sciences).

Les trois domaines de x variant de 0 à 0,33, 0,33 à 0,66 et 0,66 à 1 ont alors été explicités (Génin et al., 2006, Geoscience).

Ainsi, une valeur de x supérieure à 0,66 correspond-elle à une structure qui impliquerait plus d'énergie pour pouvoir être atteinte dans les conditions naturelles, alors que se forme préférentiellement la magnétite, de Fe₃O₄ à γ-Fe₂O₃, avec une structure spinelle.

Pour des valeurs de x inférieures à 0,33, la structure cristallographique est métastable. Cette structure cristallographique s'obtient alors par cyclage voltampérométrique.

Le cyclage voltampérométrique est une méthode au cours de laquelle on fait varier avec un potentiomètre la tension du solide de façon continue cycliquement.

Le terme « métastable » désigne un système qui correspond à un minimum local de l'énergie mais où ce minimum n'est pas le plus bas, laissant à ce dernier le terme de stable.

Le passage du solide de x = 0,33 à x = 1 s'obtient de façon continue oxydation progressive dans des conditions d'oxydation vive telles qu'on les obtient par l'eau oxygénée H₂O₂. Il s'agit d'un phénomène de déprotonation interne au composé, au cours duquel certains ions OH- deviennent O²⁻, transformant corrélativement des ions Fe^{II} en Fe^{III}.

En particulier, le passage du solide de x = 0,33 à x = 1 est obtenu par oxydation immédiate du composé stœchiométrique, l'hydroxysel ferreux ferrique (x = 0,33) de formule [Fe^{II}₂ₙFe^{III}ₙ(OH)₆ₙ]ⁿ⁺[Aⁿ⁻,mH₂O]ⁿ⁻, dans des conditions d'oxydation vive telles qu'on les obtient par l'eau oxygénée H₂O₂.

La déprotonation en continu de l'oxyhydroxycarbonate ferreux ferrique a été démontrée pour la première fois par Ruby et al., 2006, Environ. Sci. Technol.. Aucun autre oxyde (comportant ou non du fer) connu ne possède un tel phénomène de déprotonation de façon continue.

La substance S est notamment présente dans un milieu liquide. Un tel milieu liquide est plus ou moins chargé en matière organique.

L'oxyhydroxysel ferreux ferrique selon l'invention possède des propriétés d'oxydoréduction tout à fait inédites.

L'invention a donc pour objet les couples d'oxydoréduction S_{réduit} /S et Fe^{II}/Fe^{III} au sein du catalyseur.

Lorsque l'anion est le carbonate et que x varie de 0,33 à 0,66, le potentiel redox (ou potentiel d'électrode) du couple Fe^{II} / Fe^{III} aux sites cristallographiques de Fe^{II} varie de -0,21 à +0,11 V (référence électrode standard à hydrogène), ce qui correspond à un potentiel chimique variant de -600 kJ mole⁻¹ à -582 kJ mole⁻¹.

L'expression «potentiel redox aux sites cristallographiques de Fe^{II}» désigne le potentiel chimique auquel se fixe le Fe^{II} en solution s'il y a équilibre entre solide et solution. Le site cristallographique de Fe^{II} est donc également le site où est localisé le Fe^{II} dans le solide.

Le terme anion désigne tout ion de charge négative. Dans le cadre de la présente invention, l'anion a 1, 2 ou 3 charges négatives, et notamment 2 charges négatives (par exemple le carbonate).

Lorsque x est égal à 0, l'oxyhydroxysel ferreux ferrique devient simplement l'oxyhydroxysel ferreux de formule [Fe^{II}₃ₙO₆ₙH₇ₙ]ⁿ⁺[Aⁿ⁻,mH₂O]ⁿ⁻. Il s'agit alors d'une protonation au cours de laquelle OH⁻ devient H₂O.

En particulier, lorsque l'anion a deux charges négatives, l'oxyhydroxysel ferreux devient l'oxyhydroxysel ferreux de formule [Fe^{II}₆O₁₂H₁₄]²⁺A²⁻.

A titre d'exemple, pour les carbonates, l'oxyhydroxysel ferreux est l'oxyhydroxycarbonate ferreux de formule [Fe^{II}₆O₁₂H₁₄]²⁺[CO₃²⁻,3H₂O]²⁻.

Lorsque x est égal à 1, l'oxyhydroxysel ferreux ferrique devient simplement l'oxyhydroxysel ferrique de formule [Fe^{III}₃ₙO₆ₙH₄ₙ]ⁿ⁺[Aⁿ⁻,mH₂O]ⁿ⁻.

En particulier, lorsque l'anion a deux charges négatives, l'oxyhydroxysel ferrique devient l'oxyhydroxysel ferrique de formule [Fe^{III}₆O₁₂H₈]²⁺A²⁻.

A titre d'exemple, pour les carbonates, l'oxyhydroxysel ferrique est l'oxyhydroxycarbonate ferrique de formule [Fe^{III}₆O₁₂H₈]²⁺[CO₃²⁻,3H₂O]²⁻.

Lorsque x est compris dans le domaine de 0,33 à 0,66, l'oxyhydroxysel ferreux ferrique est le composé chimique homologue du minéral appelé « fougérite » (IMA 2003-057) et qui a été identifié pour la première fois dans des sols hydromorphes de la forêt domaniale de Fougères (Ile et Vilaine).

L'instant où sont mis en présence l'oxyhydroxysel ferreux ferrique, les bactéries ferri-réductrices et la matière organique, et éventuellement la substance S, est appelé « instant d'initialisation du procédé » ou « instant initial ».

L'expression « après la mise en régime du procédé » désigne l'instant à partir duquel l'oxyhydroxysel ferreux ferrique correspond à une valeur de x comprise dans le domaine 0,33 à 0,66. Le catalyseur est alors prêt à fonctionner.

La phase qui débute à l'instant d'initialisation du procédé et se termine à l'instant à partir duquel l'oxyhydroxysel ferreux ferrique correspond à une valeur de x inférieur ou égale à 0,66 est appelée phase de « mise en régime du procédé» ou phase d'« activation du catalyseur ».

Lorsque x est inférieur à 0,66 à l'instant d'initialisation du procédé, la phase de mise en régime du procédé n'existe plus.

La valeur de x varie au cours du procédé d'oxydo-réduction, et de manière inédite, cette variation de x se fait *in situ,* n'entraînant pas de modification substantielle de la structure de l'oxyhydroxy sel ferreux ferrique. De fait, la réduction bactérienne peut se faire sans qu'il y ait dissolution du précurseur ferrique suivie d'une reprécipitation de l'oxyhydroxysel.

La description décrit notamment l'utilisation telle que définie ci-dessus, pour la mise en oeuvre d'un procédé dans lequel la substance S est réduite en une substance S_{réduit} par oxydation de Fe^{II} en Fe^{III} et dans lequel la matière organique est oxydée à l'issue de la réduction de Fe^{III} en Fe^{II} par les bactéries ferri-réductrices.

Il y a donc consommation de matière organique au cours du procédé selon l'invention.

La description décrit en particulier l'utilisation telle que définie ci-dessus, pour la mise en oeuvre d'un procédé dans lequel Fe^{II} est régénéré à partir de Fe^{III} et réciproquement, de manière cybernétique.

La régénération de Fe^{II} à partir de Fe^{III} ne se fait que si le catalyseur est en état de fonctionnement, en particulier dû à la présence de la substance à réduire S.

L'expression « de manière cybernétique » signifie de manière « cyclique continu » tant qu'il n'y a pas épuisement de la substance S, de la matière organique et / ou tant que les bactéries ferri-réductrices restent activent.

Ainsi, la valeur de x s'ajuste en permanence en fonction de la quantité relative de bactéries actives et de la quantité de substance à réduire.

La description concerne en particulier l'utilisation telle que définie ci-dessus, dans laquelle le transfert d'électrons entre Fe^{II} et Fe^{III} a lieu de façon réversible *in situ* au sein dudit catalyseur.

L'expression « de manière réversible » signifie que le transfert d'électrons a lieu à la fois dans le sens Fe^{II} à Fe^{III} (libération d'un électron par Fe^{II}), dû à la substance S, et dans le sens Fe^{III} à Fe^{II} (captage d'un électron par Fe^{III}), dû aux bactéries selon la demi-réaction électronique : Fe^{III} + e- ↔ Fe^{II}.

L'expression « *in situ* » signifie que le transfert de charges, électrons et protons, a lieu à travers le catalyseur, sans modification de la structure cristalline du catalyseur, ni diffusion de matière.

Le transfert d'électrons entre Fe^{II} et Fe^{III} s'accompagne d'un transfert de protons entre OH⁻ et O²⁻ qui a également lieu de façon réversible *in situ* dans ledit catalyseur fonctionnel.

Selon un mode de réalisation avantageux, la description décrit l'utilisation telle que définie ci-dessus, dans laquelle ledit procédé d'oxydoréduction a lieu en conditions d'anoxie.

L'expression «en conditions d'anoxie » signifie en l'absence substantielle d'oxygène, comme c'est généralement le cas dans un milieu biologique où aucun apport extérieur d'oxygène n'est effectué.

De préférence, la description concerne l'utilisation telle que définie ci-dessus, dans laquelle x est supérieur à 0,66 à l'instant initial avant mise en régime du procédé d'oxydoréduction.

Selon un mode de réalisation particulièrement avantageux, la description concerne l'utilisation telle que définie ci-dessus, dans laquelle x est égal à 1 à l'instant initial avant mise en régime du procédé d'oxydoréduction.

La présente description décrit l'utilisation telle que définie ci-dessus, dans laquelle l'anion est choisi parmi le carbonate, chlorure, sulfate, fluorure, iodure, oxalate, méthanoate.

Selon un mode de réalisation avantageux, la description concerne l'utilisation telle que définie ci-dessus, dans laquelle l'anion est le carbonate.
la description concerne particulièrement l'utilisation telle que définie ci-dessus, dans laquelle la substance S est choisie parmi des polluants minéraux tels que le nitrate, séléniate, chromate, arséniate ou parmi des polluants organiques notamment des produits phytosanitaires.

Par « polluants minéraux », on désigne tout polluant inorganique, notamment nitrate, séléniate, chromate, arséniate.

Par « polluants organiques », on désigne des polluants comportant de la matière carbonée, notamment certains produits phytosanitaires.

Par « produits phytosanitaires » ou « insecticides », on désigne les acaricides, bactéricides, fongicides, herbicides, nématicides, rodenticides, taupicides, molluscicides, corvicides, fumigants.

Une utilisation préférée selon la description est caractérisé en ce que la substance S est le nitrate NO₃⁻, le nitrate étant réduit en diazote N₂.

La description concerne l'utilisation telle que définie ci-dessus, dans laquelle les bactéries sont des bactéries aérobies-anaérobies facultatives.

Des bactéries anaérobies sont des bactéries qui vivent en l'absence substantielle d'oxygène. Parmi ces bactéries, celles qui n'ont pas besoin d'un accepteur d'électron externe de substitution pour respirer sont les bactéries fermentatives.

Les bactéries anaérobies utilisées dans l'invention sont choisies parmi les bactéries à respiration obligatoire.

Des bactéries aérobies facultatives sont des bactéries qui peuvent vivre en présence ou en absence substantielle d'oxygène.

La description décrit notamment l'utilisation telle que définie ci-dessus, dans laquelle les bactéries sont choisies parmi les genres *Shewanella putrefaciens, Geobacter sp..*

Les bactéries du genre *Shewanella* sont des bactéries aérobies facultatives.

Les bactéries du genre *Geobacter* sont des bactéries anaérobies strictes.

La présente description concerne également l'utilisation telle que définie ci-dessus, dans laquelle l'oxyhydroxysel ferreux ferrique est formé à partir d'un précurseur de structure cristalline différente de celle dudit oxyhydroxysel ferreux ferrique, ledit précurseur étant un oxyhydroxyde ferrique tel que la ferrihydrite, la lépidocrocite, la goethite, en présence de bactéries ferri-réductrices et d'anions.

La ferrihydrite, la lépidocrocite et la goethite ont été largement décrites par Cornel et Schwertmann (Iron oxides,Wiley-VHC, 2nde édition). Il s'agit de formes allotropiques de l'oxyhydroxyde ferrique FeOOH : la ferrihydrite correspond à δ'-FeOOH, la lépidocrocite à γ-FeOOH, et la goethite à α-FeOOH.

Le nom qui se termine en «*ite*» est le minéral homologue du composé chimique.

Par « précurseur de structure cristalline différente de celle dudit oxyhydroxysel ferreux ferrique », on désigne tout composé, de structure cristalline différente de celle dudit oxyhydroxysel ferreux ferrique, à partir duquel peut se former directement ou indirectement (impliquant éventuellement la formation d'un composé intermédiaire) l'oxyhydroxysel ferreux ferrique tel que défini ci-dessus.

En particulier, le précurseur peut être soit un oxyhydroxyde ferrique, soit un oxyhydroxysel ferrique.

La description décrit notamment l'utilisation d'un HDL telle que définie ci-dessus, en association avec un métal choisi parmi Cu(II), Ag(I), Cd(II), Ni(II), Hg(II), Pb(II) et Mn(II), préférentiellement Cu(II), en proportion d'environ 2 à 20% (m/m) par rapport au Fe total.

Le métal et plus particulièrement le cuivre permet d'augmenter la cinétique de la réaction qui s'effectue alors beaucoup plus facilement par déprotonation. Si l'HDL n'est pas en association avec un métal, la réaction est beaucoup plus longue et s'effectue par dissolution, reprécipitation.

La description décrit également l'utilisation d'un HDL telle que définie ci-dessus, en association avec des ions phosphates en proportion d'au moins 1%.

Les ions phosphates sont adsorbés sur le catalyseur et permettent de stabiliser les feuillets de HDL. Dans le cas de la fougérite, les phosphates adsorbés sur celles-ci évitent qu'elle se dismute en magnétite.

Le phosphate peut être additionné au catalyseur mais peut également être apporté par le milieu environnant, notamment par les fosses septiques voire les eaux de captage polluées.

La présente invention a pour objet un procédé permettant de réduire une substance S en une substance S_{réduit} comprenant :
- la mise en présence d'un HDL, en tant que catalyseur ou précurseur dudit catalyseur de même structure cristalline que celle dudit catalyseur, ledit HDL comportant un cation bivalent M²⁺ partiellement ou totalement substitué par Fe^{II}, et un cation trivalent T éventuellement substitué par Fe^{III}, de formule générale suivante :

   [M²⁺_{(z)}Fe^{II}_{(1-y-z)}T³⁺ₜFe^{III}_{(y-t)}O₂H₂]^{N+}[(y/n)Aⁿ⁻,mH₂O]^{n-⁻},

   dans laquelle •
   1/4 <y<1/3, z<l-y et t<y, Aⁿ⁻ est un anion de charge n, n prenant les valeurs 1, 2 ou 3, notamment 2, m est un nombre entier variant de 1 à 10, notamment de 1 à 4, avantageusement 3,
   et le rapport x = (y-t)/(1-z-t) varie de 0 à 1,
   ledit HDL étant utilisé en association avec des bactéries ferriréductrices susceptibles de réduire Fe^{III} en Fe^{II} et en présence de matière organique,
- si x est supérieur à 0,66 à l'instant initial, une phase de mise en régime du procédé d'oxydoréduction correspondant à la réduction du Fe^{III} en Fe^{II} au sein dudit HDL par lesdites bactéries ferri-réductrices, entraînant une variation de x jusqu'à une valeur inférieure ou égale à 0,66, pour obtenir ledit HDL sous forme de catalyseur, sans modification substantielle de la structure cristalline dudit HDL,
- une phase de réduction catalytique de la substance S, ajoutée à l'ensemble comprenant le HDL, les bactéries et la matière organique, en une substance S_{réduit} par oxydation du Fe^{II} en Fe^{III} au sein dudit HDL couplée à une étape d'oxydation catalytique de la matière organique par réduction du Fe^{III} en Fe^{II}, le potentiel rédox du couple S_{réduit} /S étant supérieur à celui du couple Fe^{III}/Fe^{II} aux sites cristallographiques du Fe^{II},
ledit HDL est en association avec un métal choisi parmi Cu(II), Ag(I), Cd(II), Ni(II), Hg(II), Pb(II) et Mn(II), préférentiellement Cu(II), en proportion d'environ 2 à 20% (m/m) par rapport au Fe total,
ladite mise en présence d'un HDL avec des bactéries ferri-réductrices susceptibles de réduire Fe^{III} en Fe^{II} en présence de matière organique ayant lieu sans dissolution du précurseur suivie d'une reprécipitation du catalyseur ;
ledit Fe^{II} étant régénéré à partir de Fe^{III} et réciproquement, de manière " cyclique continu " tant qu'il n'y a pas épuisement de la substance S, de la matière organique et / ou tant que les bactéries ferri-réductrices restent activent.
A l'instant initial, l'oxyhydroxysel ferreux ferrique tel que défini ci-dessus est mis en présence des susdites bactéries ferri-réductrices et de la matière organique.

La substance S est mise en présence de l'oxyhydroxysel ferreux ferrique à l'instant initial, pendant l'activation du catalyseur ou après la mise en régime du procédé.

En particulier, lorsque la valeur de x est supérieure à 0,66 à l'instant initial, il peut être avantageux d'ajouter la substance S une fois que x a atteint une valeur inférieure à 0,66, après la mise en régime du procédé d'oxydoréduction.

Quelle que soit la valeur de x à l'instant initial, les bactéries ferri-réductrices oxydent la matière organique au cours de leur respiration. L'accepteur final d'électrons de la chaîne respiratoire bactérienne reste le Fe^{III} qui se trouve ainsi réduit en Fe^{II} au sein même de l'oxyhydroxysel ferreux ferrique. La réduction de Fe^{III} en Fe^{II} induit donc une diminution de la valeur x, jusqu'à une valeur inférieure ou égale à 0,66 au sein même de l'oxyhydroxysel ferreux ferrique, sans modification substantielle de sa structure cristalline.

Si x est inférieur ou égal à 0,66, une réduction de la substance S en une substance S_{réduit} par oxydation du Fe^{II} en Fe^{III} au sein même du catalyseur se produit en plus de la respiration bactérienne.

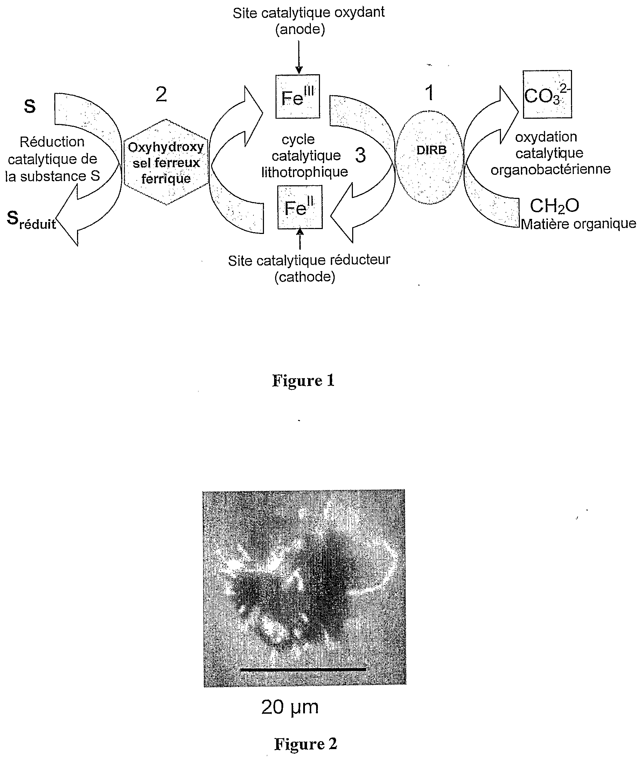

La réduction catalytique de la substance S en une substance S_{réduit} par oxydation du Fe^{II} en Fe^{III} au sein de l'oxyhydroxysel ferreux ferrique est couplée à une régénération du Fe^{III} en Fe^{II} par réduction bactérienne corrélative à l'oxydation catalytique de la matière organique (voir figure 1).

Ladite réduction de la substance S est qualifiée de catalytique, car cette réaction est couplée à l'oxydation catalytique enzymatique de la matière organique par réduction du Fe^{III} en Fe^{II}. La réduction catalytique de la substance S se substitue à une réduction éventuelle directe de la substance S par certaines bactéries qui l'utilisent pour leur respiration.

L'oxyhydroxysel ferreux ferrique facilite voire autorise la réduction de la substance S par les bactéries.

Le Fe^{III} issu de la réduction de la substance S régénère alors en permanence le Fe^{II} via la respiration bactérienne. Aussi le catalyseur est-il lui aussi régénéré en permanence.

D'un point de vue thermodynamique, la réduction de la substance S serait substantiellement diminuée, voire inexistante, lorsque la valeur de x dépasse 0,66.

L'invention a notamment pour objet un procédé permettant de réduire une substance S en une substance S_{réduit} tel que défini ci-dessus, dans lequel, dans lequel la proportion de Fe^{II} substituant l'élément bivalent est comprise de 1 % (m/m) à 100 % (m/m) par rapport à la quantité totale d'élément bivalent.

L'invention a plus particulièrement pour objet un procédé permettant de réduire une substance S en une substance S_{réduit} tel que défini ci-dessus, dans lequel la proportion de Fe^{III} dans l'élément trivalent est comprise de 0 % (m/m) à 100 % (m/m) par rapport à la quantité totale d'élément trivalent.

L'invention a notamment pour objet un procédé permettant de réduire une substance S en une substance S_{réduit} tel que défini ci-dessus, dans laquelle M²⁺ est choisi parmi Mg⁺, Ni²⁺, Ca²⁺, Mn²⁺ et T³⁺ est parmi Al³⁺, Cr⁺.

L'invention a notamment pour objet un procédé, permettant de réduire une substance S en une substance S_{réduit} tel que défini ci-dessus, dans lequel ledit HDL est sous la forme d'un oxyhydroxysel ferreux ferrique et comprenant :
- la mise en présence d'un oxyhydroxysel ferreux ferrique, en tant que catalyseur ou précurseur dudit catalyseur de même structure cristalline que celle dudit catalyseur, ayant la formule

   [Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻

   dans laquelle Aⁿ⁻ est un anion de charge n, n prenant les valeurs 1, 2 ou 3, notamment 2, et x est compris de 0 à 1 et m est un nombre entier variant de 1 à 10, notamment de 1 à 4, avantageusement 3, à l'instant initial,
   avec des bactéries ferri-réductrices susceptibles de réduire le Fe^{III} en Fe^{II} et de la matière organique,
- si x est supérieur à 0,66 à l'instant initial, une phase de mise en régime du procédé d'oxydoréduction correspondant à la réduction du Fe^{III} en Fe^{II} au sein dudit oxyhydroxysel ferreux ferrique par lesdites bactéries ferri-réductrices, entraînant une variation de x jusqu'à une valeur inférieure ou égale à 0,66, pour obtenir ledit oxyhydroxysel ferreux ferrique sous forme de catalyseur sans modification substantielle de la structure cristalline dudit oxyhydroxysel ferreux ferrique,
- une phase de réduction catalytique de la substance S, ajoutée à l'ensemble comprenant l'oxyhydroxysel ferreux ferrique, les bactéries et la matière organique, en une substance S_{réduit} par oxydation du Fe^{II} en Fe^{III} au sein de l'oxyhydroxysel ferreux ferrique couplée à une étape d'oxydation catalytique de la matière organique par réduction du Fe^{III} en Fe^{II},
le potentiel rédox du couple S_{réduit} /S étant supérieur à celui du couple Fe^{II}/Fe^{III} aux sites cristallographiques du Fe^{II}.

L'invention a pour objet un procédé permettant de réduire une substance S en une substance S_{réduit} tel que défini ci-dessus, dans lequel ledit HDL est en association avec un métal choisi parmi Cu(II), Ag(I), Cd(II), Ni(II), Hg(II), Pb(II) et Mn(II), préférentiellement Cu(II), en proportion d'environ 2 à 20% (m/m) par rapport au Fe total.

L'invention a plus particulièrement pour objet un procédé permettant de réduire une substance S en une substance S_{réduit} tel que défini ci-dessus, dans lequel ledit HDL est en association avec des ions phosphates en proportion d'au moins 1%.

La présente invention a pour objet un procédé permettant de réduire une substance S en une substance S_{réduit} comprenant :
- la mise en présence d'un HDL, en tant que précurseur dudit catalyseur, ledit HDL comportant un cation bivalent M²⁺ partiellement ou totalement substitué par Fe^{II}, et un cation trivalent T éventuellement substitué par Fe^{III}, de formule générale suivante :

   [M²⁺_{(z)}Fe^{II}_{(1-y-z)}T³⁺ₜFe^{III}_{(y-t)}O₂H₂]ⁿ⁺[(y/n)Aⁿ⁻,mH₂O]^{n-⁻},

   dans laquelle •
   1/4 <y<1/3, z<l-y et t<y, Aⁿ⁻ est un anion de charge n, n prenant les valeurs 1, 2 ou 3, notamment 2, m est un nombre entier variant de 1 à 10, notamment de 1 à 4, avantageusement 3,
   et le rapport x = (y-t)/(1-z-t) varie de 0 à 1,
   ledit HDL étant utilisé en association avec des bactéries ferriréductrices susceptibles de réduire Fe^{III} en Fe^{II} et en présence de matière organique,
- si x est supérieur à 0,66 à l'instant initial, une phase de mise en régime du procédé d'oxydoréduction correspondant à la réduction du Fe^{III} en Fe^{II} au sein dudit HDL par lesdites bactéries ferri-réductrices, entraînant une variation de x jusqu'à une valeur inférieure ou égale à 0,66, pour obtenir ledit HDL sous forme de catalyseur, sans modification substantielle de la structure cristalline dudit HDL,
- une phase de réduction catalytique de la substance S, ajoutée à l'ensemble comprenant le HDL, les bactéries et la matière organique, en une substance S_{réduit} par oxydation du Fe^{II} en Fe^{III} au sein dudit HDL couplée à une étape d'oxydation catalytique de la matière organique par réduction du Fe^{III} en Fe^{II}. le potentiel rédox du couple S_{réduit} /S étant supérieur à celui du couple Fe^{III}/Fe^{II} aux sites cristallographiques du Fe^{II},
ledit HDL est en association avec un métal choisi parmi Cu(II), Ag(I), Cd(II), Ni(II), Hg(II), Pb(II) et Mn(II), préférentiellement Cu(II), en proportion d'environ 2 à 20% (m/m) par rapport au Fe total,
ladite mise en présence d'un HDL avec des bactéries ferri-réductrices susceptibles de réduire Fe^{III} en Fe^{II} en présence de matière organique ayant lieu sans dissolution du précurseur suivie d'une reprécipitation du catalyseur ;
ledit Fe^{II} étant régénéré à partir de Fe^{III} et réciproquement, de manière " cyclique continu " tant qu'il n'y a pas épuisement de la substance S, de la matière organique et / ou tant que les bactéries ferri-réductrices restent activent.La réduction catalytique de la substance S en une substance S_{réduit} par oxydation du Fe^{II} en Fe^{III} au sein de l'HDL est donc couplée à une régénération du Fe^{III} en Fe^{II} par réduction bactérienne.

L'invention a également pour objet un procédé permettant de réduire une substance S en une substance S_{réduit}, tel que défini ci-dessus, comprenant :
- la mise en présence d'un oxyhydroxysel ferreux ferrique, en tant que catalyseur, ayant la formule

   [Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻

   dans laquelle Aⁿ⁻ est un anion de charge n, n prenant les valeurs 1, 2 ou 3, notamment 2, m est un nombre entier variant de 1 à 10, notamment de 1 à 4, avantageusement 3 et x est compris de 0,33 à 0,66 à l'instant initial,
   avec des bactéries ferri-réductrices susceptibles de réduire le Fe^{III} en Fe^{II} et de la matière organique,
- une phase de réduction catalytique de la substance S, ajoutée à l'ensemble comprenant l'oxyhydroxysel ferreux ferrique, les bactéries et la matière organique, en une substance S_{réduit} par oxydation du Fe^{II} en Fe^{III} couplée à une étape d'oxydation catalytique de la matière organique par réduction du Fe^{III} en Fe^{II},
   le potentiel redox du couple S_{réduit} /S étant supérieur à celui du couple Fe^{II}/Fe^{III} aux sites cristallographiques du Fe^{II}.

La réduction catalytique de la substance S en une substance S_{réduit} par oxydation du Fe^{II} en Fe^{III} au sein de l'oxyhydroxysel ferreux ferrique est donc couplée à une régénération du Fe^{III} en Fe^{II} par réduction bactérienne.

L'invention a également pour objet un procédé permettant de réduire une substance S en une substance S_{réduit} comprenant :
- la mise en présence d'un oxyhydroxysel ferreux ferrique, en tant que précurseur de catalyseur, ayant la formule

   [Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻

   dans laquelle Aⁿ⁻ est un anion de charge n, n prenant les valeurs 1, 2 ou 3, notamment 2, m est un nombre entier variant de 1 à 10, notamment de 1 à 4, avantageusement 3 et x est supérieur à 0,66 à l'instant initial,
   avec des bactéries ferri-réductrices susceptibles de réduire le Fe^{III} en Fe^{II} et de la matière organique,
- une phase de mise en régime du procédé d'oxydoréduction correspondant à la réduction du Fe^{III} en Fe^{II} au sein dudit oxyhydroxysel ferreux ferrique par lesdites bactéries ferri-réductrices, entraînant une variation de x jusqu'à une valeur inférieure ou égale à 0,66, pour obtenir ledit oxyhydroxysel ferreux ferrique sous forme de catalyseur sans modification substantielle de la structure cristalline dudit oxyhydroxysel ferreux ferrique,
- une phase de réduction catalytique de la substance S, ajoutée à l'ensemble comprenant l'oxyhydroxysel ferreux ferrique, les bactéries et la matière organique, en une substance S_{réduit} par oxydation du Fe^{II} en Fe^{III} au sein dudit oxyhydroxysel ferreux ferrique couplée à une étape d'oxydation catalytique de la matière organique par réduction du Fe^{III} en Fe^{II}
   le potentiel redox du couple S_{réduit} /S étant supérieur à celui du couple Fe^{II}/Fe^{III} aux sites cristallographiques du Fe^{II}.

La réduction catalytique de la substance S en une substance S_{réduit} par oxydation du Fe^{II} en Fe^{III} au sein de l'oxyhydroxysel ferreux ferrique est donc couplée à une régénération du Fe^{III} en Fe^{II} par réduction bactérienne.

L'invention a notamment pour objet un procédé permettant de réduire une substance S en une substance S_{réduit}, tel que défini ci-dessus, dans lequel ledit HDL est en association avec un métal choisi parmi Cu(II), Ag(I), Cd(II), Ni(II), Hg(II), Pb(II) et Mn(II), préférentiellement Cu(II), en proportion d'environ 2 à 20% (m/m) par rapport au Fe total.

L'invention a plus particulièrement pour objet un procédé permettant de réduire une substance S en une substance S_{réduit}, tel que défini ci-dessus, dans lequel ledit HDL est en association avec des ions phosphates en proportion d'au moins 1%.

L'invention a notamment pour objet un procédé tel que défini ci-dessus, dans lequel x est égal à 1 à l'instant initial.

L'invention a pour objet un procédé tel que défini ci-dessus, lequel procédé a lieu en conditions d'anoxie.

Les conditions d'anoxie sont notamment obtenues dans un milieu confiné conduisant à une absence substantielle d'oxygène et peuvent être obtenues à l'issue de l'activité bactérienne.

L'invention a notamment pour objet un procédé tel que défini ci-dessus, dans lequel Fe^{II} est régénéré à partir de Fe^{III} et réciproquement, de manière cybernétique.

L'invention a en particulier pour objet un procédé tel que défini ci-dessus, dans lequel le transfert d'électrons entre Fe^{II} et Fe^{III} a lieu de façon réversible *in situ* dans ledit catalyseur.

L'invention a notamment pour objet un procédé tel que défini ci-dessus, dans lequel l'anion est choisi parmi le carbonate, chlorure, sulfate, fluorure, iodure, oxalate, méthanoate.

Selon un mode de réalisation préféré, la description concerne le procédé tel que défini ci-dessus dans lequel l'anion est le carbonate et ledit oxyhydroxysel ferreux ferrique est un oxyhydroxycarbonate ferreux ferrique de formule

[Fe^{II}₆₍₁₋ₓ₎Fe^{III}₆ₓO₁₂H₂₍₇₋₃ₓ₎]²⁺[CO₃²⁻,3H₂O]²⁻.

Selon un mode de réalisation avantageux du procédé tel que défini ci-dessus, la substance S est choisie parmi des polluants minéraux tels que le nitrate, séléniate, chromate, arséniate ou parmi des polluant organiques notamment des produits phytosanitaires.

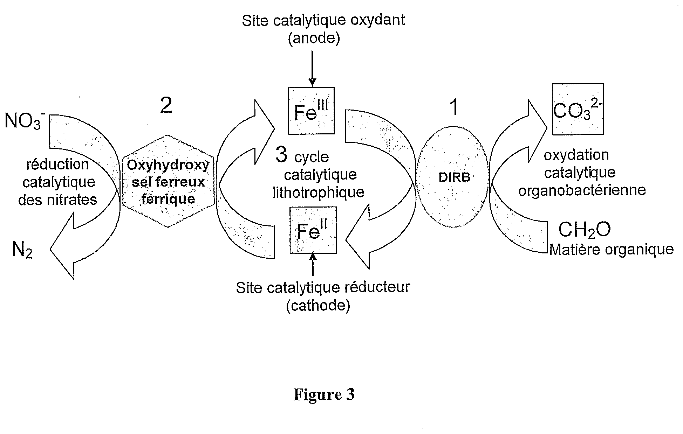

Selon un mode de réalisation particulièrement préféré du procédé selon l'invention, la substance S est le nitrate NO₃⁻, le nitrate étant réduit en diazote N₂ (voir figure 3).

L'invention a pour objet le procédé tel que défini ci-dessus, dans lequel les bactéries sont des bactéries aérobies-anaérobies facultatives.

L'invention a notamment pour objet le procédé tel que défini ci-dessus, dans lequel les bactéries sont choisies parmi *Shewanella putrefaciens, Geobacter sp.*

Dans un mode de réalisation avantageux du procédé selon l'invention, l'oxyhydroxysel ferreux ferrique est formé à partir d'un précurseur de structure cristalline différente de celle dudit oxyhydroxysel ferreux ferrique, ledit précurseur étant un oxyhydroxyde ferrique tel que la ferrihydrite, la lépidocrocite, la goethite, en présence de bactéries ferri-réductrices et d'anions.

L'invention concerne un procédé tel que défini ci-dessus caractérisé en ce que le pH est compris dans la gamme allant de 5 à 10, et notamment 7.

Lorsque le pH est inférieur à 5 ou supérieur à 10, l'activité du catalyseur et l'activité des bactéries peuvent être diminuées.

L'invention concerne également un procédé tel que défini ci-dessus, caractérisé en ce que la température varie de 5°C à 30°C.

Des températures supérieures à 30°C risquent de favoriser la formation de la magnétite mélangée à la sidérite FeCO₃ à partir de l'oxyhydroxysel ferreux ferrique.

Des températures inférieures à 5°C ralentissent les cinétiques des réactions d'oxydoréduction.

Le procédé selon l'invention fonctionne notamment dans les conditions de température et de pH que l'on trouve en particulier en climat tempéré, par exemple dans les sols naturels hydromorphes.

Un sol hydromorphe est un sol inondé et dont la morphologie est due à la présence de l'eau. Par exemple, le sol d'une nappe aquifère ou les sols des vallées d'une rivière sont hydromorphes. La grande majorité des sols des zones tempérées est hydromorphe, à plus ou moins grande profondeur du mètre à l'hectomètre.

L'oxyhydroxysel ferreux ferrique utilisé dans le procédé selon l'invention peut être obtenu par synthèse chimique ou par synthèse bactérienne.

La présente description concerne notamment un procédé tel que défini ci-dessus, dans lequel l'oxyhydroxysel ferreux ferrique est obtenu par oxydation d'un précipité de Fe(OH)₂ en présence d'anions, comprenant :
- une étape de préparation d'un précipité de Fe(OH)₂, en particulier en mélangeant en solution un sel ferreux [Fe^{II}] A²⁻ avec une base, notamment NaOH
- une étape d'agitation dudit mélange en présence d'air,
   afin d'obtenir un hydroxysel ferreux ferrique de formule

   [Fe^{II}₍₁₋ₓ₎Fe^{III}ₓ(OH)₂]^{x+}[(x/n)Aⁿ⁻]^{x-}

   dans lequel x varie dans la gamme allant de 0,25 à 0,33,
- une étape de déprotonation par oxydation avec H₂O₂ ou O₂ pur dans la solution ou par oxydation à l'air libre après séchage,
   afin d'obtenir un oxyhydroxysel ferreux ferrique dans lequel x est supérieur à 0,33.

Dans l'étape de préparation du précipité de Fe(OH)₂, la concentration de la base est avantageusement équivalente à 5/3 de la concentration de Fe^{II} (Génin et al., 2006, Geoscience).

De manière avantageuse, on prépare alors dans un premier temps un oxyhydroxysel ferreux ferrique de formule [Fe^{II}₂ₙFe^{III}ₙ(OH)₆ₙ]ⁿ⁺[Aⁿ⁻,mH₂O]ⁿ⁻ (correspondant à x = 0,33) en mettant en présence 2/3 de Fe^{II} et 1/3 de Fe^{III}. Dans un deuxième temps, H₂O₂ est ajouté dans les proportions stœchiométriques pour obtenir un oxyhydroxysel ferreux ferrique correspondant à la valeur de x visée, supérieure à 0,33, selon la réaction de déprotonation.

Cette réaction de déprotonation de l'hydroxysel ferreux ferrique par H₂O₂ est la suivante :

[Fe^{II}₂ₙFe^{III}ₙ(OH)₆ₙ]ⁿ⁺Aⁿ⁻.+(3x-1)H₂O₂→[Fe^{II}₃ₙ₍₁₋ₓ₎Fe^{III}₃ₙₓO₆ₙHₙ₍₇₋₃ₓ₎]ⁿ⁺Aⁿ⁻+n(3x-1)H₂O

Dans ce qui précède et ce qui suit, la déprotonation de l'oxyhydroxysel ferreux ferrique peut être obtenue par ajout de O₂ pur au lieu de H₂O₂.

La présente description décrit également un procédé tel que défini ci-dessus dans lequel l'oxyhydroxysel ferreux ferrique est préparé par co-précipitation des ions Fe^{II} et Fe^{III} en présence d'anions, comprenant les étape suivantes :
- préparation d'une solution de Fe^{II}, Fe^{III} et d'anions, le rapport [concentration de Fe^{III}] / [concentration de Fe^{II} et Fe^{III}] étant égal à x,
- ajout d'une solution de base, notamment NaOH, dans ladite solution de Fe^{II} et Fe^{III} en l'absence d'oxygène, afin d'obtenir un hydroxysel ferreux ferrique de formule

   [Fe^{II}₍₁₋ₓ₎Fₑ^{III}ₓ(OH)₂]^{x+}[(x/n)Aⁿ⁻]^{x-}

   dans lequel x varie dans la gamme allant de 0,25 à 0,33,
- une étape de déprotonation par oxydation avec H₂O₂ ou O₂ pur dans la solution ou par oxydation à l'air libre après séchage,
   afin d'obtenir un oxyhydroxysel ferreux ferrique dans lequel x est supérieur à 0,33.

La réaction de déprotonation de l'hydroxysel ferreux ferrique est la suivante :

[Fe^{II}₂ₙFe^{III}ₙ(OH)₆ₙ]ⁿ⁺Aⁿ⁻.+(3x-1)H₂O₂→[Fe^{II}₃ₙ₍₁₋ₓ₎Fe^{III}₃ₙₓO₆ₙHₙ₍₇₋₃ₓ₎]ⁿ⁺Aⁿ⁻+n(3x-1)H₂O.

Dans la première étape de préparation de la solution de FeII, FeIII et d'anions, la concentration en fer total dans ladite solution est typiquement comprise de 0,1 et 2 M, notamment 0,4 M et la concentration en anions est supérieure à celle de la stoechiométrie (Ruby et al., 2006, Geoscience).

L'ajout de base est préférentiellement effectué à température ambiante.

La présente invention a également pour objet un procédé tel que défini ci-dessus, dans lequel l'oxyhydroxysel ferreux ferrique est préparé par synthèse bactérienne, comprenant :
la culture de bactéries ferri-réductrices en conditions d'anoxie dans un milieu approprié comprenant :
   - Fe^{III}, en particulier sous la forme d'un oxyhydroxyde ou d'un oxyhydroxysel ferrique de formule [Fe^{III}₃ₙO₆ₙH₄ₙ]ⁿ⁺[Aⁿ⁻,mH₂O]ⁿ⁻,
   - de la matière organique, notamment du méthanoate HCO₂⁻, et
   - un anion Aⁿ⁻, si l'anion n'est pas HCO₃⁻,
afin d'obtenir un l'oxyhydroxysel ferreux ferrique dans lequel x varie dans la gamme allant de 0,33 à 0,66.

Dans l'étape de culture, le Fe^{III} présent dans le milieu est en particulier sous la forme d'un oxyhydroxyde FeOOH ou d'un oxyhydroxysel ferrique de formule

[Fe^{III}₃ₙO₆ₙH₄ₙ]ⁿ⁺[Aⁿ⁻,mH₂O]ⁿ⁻.

De manière avantageuse, ledit milieu approprié pour la culture de bactéries ferri-réductrices comprend du Fe^{III} à une concentration allant de 20 mM à 200 mM, notamment 80 mM.

Lorsque la matière organique utilisée est du méthanoate, une concentration optimale dans ledit milieu approprié est comprise de 5 mM à 200 mM, notamment de 20 à 75mM.

Eventuellement, de l'anthraquinone-2,6-disulfonate à une concentration d'environ 200 µM à environ 500 µM, notamment 100 µM, peut être ajouté dans ledit milieu de culture.

L'étape d'incubation est effectuée dans des conditions de température et d'agitation appropriée selon la souche de bactéries utilisées.

La température est notamment comprise de 10°C à 40°C, et l'incubation est de préférence réalisée sous agitation.

L'oxyhydroxysel ferreux ferrique obtenu à l'issue de l'étape de culture est préférentiellement séché, notamment par pompage sous vide.

Selon un mode de réalisation avantageux, l'invention a pour objet un procédé tel que défini ci-dessus, pour la dépollution d'un milieu à traiter.

Le milieu à traiter est un milieu liquide, qui peut être un milieu plus ou moins chargé en matière organique.

La charge organique du milieu à traiter peut être très importante, par exemple dans un milieu de type boue.

Les milieux à traiter particulièrement visés par la présente invention sont les suivants : eaux de source ou de forage ou de captage de nappes aquifères, eaux de ruissellement, cours d'eaux, étangs, lacs, puits; eaux usées urbaines, industrielles et agricoles, en particulier assainissements individuels, eaux pour réseau de distribution et eaux de station d'épuration, eaux issues de l'assainissement individuel et semi collectif (fosses septiques).

Les milieux à traiter peuvent notamment être des eaux dans les nappes aquifères et cours d'eau. A titre d'exemple, la teneur en nitrate des ces derniers en Bretagne avoisine voire dépasse fréquemment la limite légale actuelle de potabilité de 50 mg/l. La Commission européenne désire ramener cette limite à sa moitié irréversiblement en 2013.

Le procédé tel que défini ci-dessus peut également être utilisé en assainissement d'habitat dispersé, pour un traitement des eaux complémentaire à celle des fosses septiques à leur sortie, mais également en agriculture, par exemple afin d'abaisser le taux de nitrate dans le lisier d'élevage avant épandage.

Ainsi est-il envisagé de mesurer en continu au moyen de capteurs la teneur en nitrate d'une fosse à lisier, afin d'effectuer l'épandage lorsque cette teneur en nitrates a atteint la valeur souhaitée. Il s'agit de procédés relativement simples à mettre en œuvre et rustiques d'entretien, qui nécessitent de se placer en conditions d'anoxie dans un compartiment contenant le catalyseur.

La description concerne également l'utilisation d'un procédé tel que défini ci-dessus, pour limiter la prolifération excessive d'algues, en particulier les ulves.

Les algues sont notamment des algues marines.

La prolifération excessive d'algues provient en particulier de la présence de certains polluants, tels que les phosphates et les nitrates.

La prolifération excessive d'algues de type ulves résulte en particulier de la pollution par les nitrates qui se trouvent rejetés en excès dans la mer et qui gouvernent la prolifération desdites algues. C'est par exemple le cas de conditions environnementales telles que souvent observées en Bretagne.

Dans un mode de réalisation avantageux, le procédé selon l'invention est placé au niveau des eaux d'un bassin versant, afin de réduire la quantité de polluants, notamment de nitrates, dans les eaux se jetant dans la mer.

La description concerne également un produit constitué par au moins un HDL, ledit HDL comportant un cation bivalent M²⁺ partiellement ou totalement substitué par Fe^{II}, et un cation trivalent T³⁺ éventuellement substitué par Fe^{III}, de formule générale suivante :

[M²⁺_{(z)}Fe^{II}_{(1-y-z)}T³⁺ₜFe^{III}_{(y-t)}O₂H₂]ⁿ⁺[(y/n)Aⁿ⁻,mH₂O]ⁿ⁻

dans laquelle :
1/4 <y<1/3, z<1-y et t<y, Aⁿ⁻ est un anion de charge n, n prenant les valeurs 1, 2 ou 3, notamment 2, m est un nombre entier variant de 1 à 10,
notamment de 1 à 4, avantageusement 3,
et le rapport x = (y-t)/(1-z-t) pouvant varier de 0 à 1, notamment 1,
sous forme cristalline, le rapport volume superficiel sur volume massique étant supérieur à 100, sans modification substantielle de la structure cristalline dudit HDL. L'HDL tel que défini ci-dessus est un catalyseur ou un précurseur dudit catalyseur.

L'HDL tel que défini ci-dessus peut avoir notamment une granulométrie de l'ordre du nanomètre.

Quelle que soit la taille granulométrique de l'HDL selon la description, le potentiel d'oxydoréduction du couple Fe^{III}/Fe^{II} au sein dudit HDL reste inchangée.

Plus le rapport volume superficiel sur volume massique est grand, plus l'accessibilité du polluant au catalyseur est grande, et donc plus le catalyseur est efficace.

L'HDL ne subit pas de modification substantielle de sa structure cristalline, ni de sa morphologie.

La description a notamment pour objet un produit, tel que défini ci-dessus, dans lequel ledit HDL est constitué par au moins un oxyhydroxysel ferreux ferrique ayant la formule :

[Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻

dans laquelle Aⁿ⁻ est un anion de charge n, n prenant les valeurs 1, 2 ou 3, notamment 2, m est un nombre entier variant de 1 à 10, notamment de 1 à 4, avantageusement 3 et x est compris de 0 à 1, sous forme cristalline, le rapport volume superficiel sur volume massique étant supérieur à 100, sans modification substantielle de la structure cristalline dudit oxyhydroxysel ferreux ferrique.

L'oxyhydroxysel ferreux ferrique tel que défini ci-dessus est un catalyseur ou un précurseur dudit catalyseur.

L'oxyhydroxysel ferreux ferrique tel que défini ci-dessus peut avoir notamment une granulométrie de l'ordre du nanomètre.

Quelle que soit la taille granulométrique de l'oxyhydroxysel ferreux ferrique selon la description, le potentiel d'oxydoréduction du couple Fe^{III}/Fe^{II} au sein dudit oxyhydroxysel ferreux ferrique reste inchangée.

Plus le rapport volume superficiel sur volume massique est grand, plus l'accessibilité du polluant au catalyseur est grande, et donc plus le catalyseur est efficace.

L'oxyhydroxysel ferreux ferrique ne subit pas de modification substantielle de sa structure cristalline, ni de sa morphologie.

Selon un mode de réalisation avantageux, le produit défini ci-dessus est l'oxyhydroxycarbonate ferreux ferrique de formule :

[Fe^{II}₆₍₁₋ₓ₎Fe^{III}₆ₓO₁₂H₂₍₇₋₃ₓ₎]²⁺[CO₃²⁻,3H₂O]²⁻

dans laquelle l'anion est le carbonate et x est compris de 0 à 1.

Selon un mode de réalisation particulièrement avantageux, le produit défini ci-dessus est l'oxyhydroxycarbonate ferrique de formule :

[Fe^{III}₆O₁₂H₈]²⁺[CO₃²⁻,3H₂O]²⁻.

La description concerne notamment un produit, tel que défini ci-dessus, dans lequel ledit HDL est en association avec un métal choisi parmi Cu(II), Ag(I), Cd(II), Ni(II), Hg(II), Pb(II) et Mn(II), préférentiellement Cu(II), en proportion d'environ 2 à 20% (m/m) par rapport au Fe total.

La description décrit notamment un produit, tel que défini ci-dessus, dans lequel ledit HDL est en association avec des ions phosphates en proportion d'au moins 1%.

La description décrit également un produit constitué par au moins un support recouvert d'au moins un HDL, ledit HDL comportant un cation bivalent M²⁺ partiellement ou totalement substitué par Fe^{II}, et un cation trivalent T³⁺ éventuellement substitué par Fe^{III}, de formule générale suivante :

[M²⁺_{(z)}Fe^{II}_{(1-y-z)}T³⁺ₜFe^{III}_{(y-t)}O₂H₂]ⁿ⁺[(y/n)Aⁿ⁻,mH₂O]ⁿ⁻

dans laquelle :
1/4 <y<1/3, z<1-y et t<y, Aⁿ⁻ est un anion de charge n, n prenant les valeurs 1, 2 ou 3, notamment 2, m est un nombre entier variant de 1 à 10,
notamment de 1 à 4, avantageusement 3,
et le rapport x = (y-t)/(1-z-t) varie de 0 à 1, notamment 1,
sous forme cristalline, le support étant notamment choisi parmi du sable, de l'argile, des billes de polymère.

La description concerne un produit tel que défini ci-dessus, caractérisé en ce que le support est choisi parmi du sable, de l'argile, des billes de polymère.

Un produit préféré selon la description est caractérisé en ce que le support présente une granulométrie d'environ 50 µm à environ 200 µm, notamment d'environ 100 µm.

La description concerne notamment un produit, tel que défini ci-dessus, dans lequel ledit HDL est constitué par au moins un oxyhydroxysel ferreux ferrique ayant la formule :

[Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻

dans laquelle Aⁿ⁻ est un anion de charge n, n prenant les valeurs 1, 2 ou 3, notamment 2, m est un nombre entier variant de 1 à 10, notamment de 1 à 4, avantageusement 3, et x est compris de 0 à 1, sous forme cristalline.

L' oxyhydroxysel ferreux ferrique peut être obtenu par synthèse chimique telle que définie ci-dessus ou par réduction bactérienne d'oxyhydroxydes ferriques tels que la ferrihydrite, lépidocrocite ou goethite.

Un produit avantageux selon la description est un produit tel que défini ci-dessus constitué par au moins un support recouvert d'au moins un oxyhydroxycarbonate ferreux ferrique ayant la formule :

[Fe^{II}₆₍₁₋ₓ₎Fe^{III}₆ₓO₁₂H₂₍₇₋₃ₓ₎]²⁺[CO₃²⁻,3H₂O]²⁻

dans laquelle l'anion est le carbonate et x est compris de 0 à 1, sous forme cristalline.

De préférence, le produit tel que défini est constitué d'au moins un support recouvert d'un oxyhydroxycarbonate ferreux ferrique.

Dans un mode de réalisation préféré de de la description, le produit tel que défini ci-dessus est caractérisé en ce que x est égal à 1.

En particulier, il s'agit de l'oxyhydroxycarbonate ferrique de formule [Fe^{III}₆O₁₂H₈]²⁺ [CO₃²⁻,3H₂O]²⁻.

La description concerne notamment un produit tel que défini ci-dessus, dans lequel ledit HDL est en association avec un métal choisi parmi Cu(II), Ag(I), Cd(II), Ni(II), Hg(II), Pb(II) et Mn(II), préférentiellement Cu(II), en proportion d'environ 2 à 20% (m/m) par rapport au Fe total.

Le description décrit plus particulièrement un produit tel que défini ci-dessus, dans lequel ledit HDL est en association avec des ions phosphates en proportion d'au moins 1%.

Un produit particulièrement préféré selon la description est caractérisé en ce que le rapport du volume de dépôt superficiel d'oxyhydroxysel ferreux ferrique sur le volume de support est compris entre environ 1/100 et environ 1/10000, notamment 1/1000.

Les produits tels que définis ci-dessus peuvent être obtenus par la mise en œuvre des procédés suivants : une préparation « à sec » du revêtement que l'on dépose sur un support, une préparation « en solution » du revêtement, ou une préparation du revêtement au cours de laquelle le support est ajouté au moment même de la synthèse de l'oxyhydroxysel ferreux ferrique.

Lorsque le produit comprend un oxyhydroxysel ferreux ferrique de formule :

[Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻

dans laquelle Aⁿ⁻ est un anion de charge n, n prenant les valeurs 1, 2 ou 3, notamment 2, m est un nombre entier variant de 1 à 10, notamment de 1 à 4, avantageusement 3, et x est différent de 1, la préparation du produit est effectuée en conditions d'anoxie pour éviter une oxydation dudit oxyhydroxysel ferreux ferrique.

Dans un mode de réalisation préféré, le produit tel que défini ci-dessus comprend un oxyhydroxysel ferrique de formule [Fe^{III}₃ₙO₆ₙH₄ₙ]ⁿ⁺[Aⁿ⁻,mH₂O]ⁿ⁻, Aⁿ⁻ étant un anion de charge n, n prenant les valeurs 1, 2 ou 3, notamment 2 et m est un nombre entier variant de 1 à 10, notamment de 1 à 4, avantageusement 3.

La description décrit notamment un support recouvert d'un oxyhydroxysel ferrique, tel que défini ci-dessus, de formule [Fe^{III}₃ₙO₆ₙH₄ₙ]ⁿ⁺[Aⁿ⁻,mH₂O]ⁿ⁻, dans laquelle Aⁿ⁻ est un anion de charge n, n prenant les valeurs 1, 2 ou 3, notamment 2, et m est un nombre entier variant de 1 à 10, notamment de 1 à 4, avantageusement 3 tel qu'obtenu par la mise en œuvre du procédé comprenant les étape de :
- coprécipitation en solution d'ions Fe^{II} et Fe^{III} en présence d'anions Aⁿ⁻ en l'absence d'oxygène, pour obtenir un hydroxysel ferreux ferrique de formule

   [FeH₂ₙFe^{III}ₙ(OH)₆ₙ]ⁿ⁺[Aⁿ⁻,mH₂O]ⁿ⁻,
- oxydation complète et rapide par H₂O₂ ou O₂ pur dans la solution ou à l'air dudit hydroxysel ferreux ferrique sec après séchage, pour obtenir un oxyhydroxysel ferrique de formule

   [Fe^{III}₃ₙO₆ₙH₄ₙ]ⁿ⁺[Aⁿ⁻,mH₂O]ⁿ⁻,
- séchage dudit oxyhydroxysel ferrique, pour obtenir un oxyhydroxysel ferrique sec, et
- mélange de l'oxyhydroxysel ferrique sec avec ledit support, pour obtenir ledit support recouvert d'un oxyhydroxysel ferrique.

Le séchage, obtenu par exemple sous vide, permet notamment d'obtenir un produit constitué de moins de 1 % d'eau en masse.

L'étape de mélange est notamment réalisée mécaniquement.

De manière avantageuse, lors du mélange, l'oxyhydroxysel ferrique est en excès par rapport au support.

Après l'étape de mélange, le support recouvert de l'oxyhydroxysel ferrique peut être lavé, notamment à l'eau distillée.

La description concerne également un support recouvert d'un oxyhydroxysel ferrique de formule Fe^{III}₃ₙO₆ₙH₄ₙ[Aⁿ⁻,mH₂O]ⁿ⁻, dans laquelle Aⁿ⁻ est un anion de charge n, et m est un nombre entier variant de 1 à 10, notamment de 1 à 4, avantageusement 3 tel qu'obtenu par la mise en œuvre du procédé comprenant les étape de :
- coprécipitation en solution d'ions Fe^{II} et Fe^{III} en présence d'anions Aⁿ⁻ en l'absence d'oxygène, pour obtenir un hydroxysel ferreux ferrique de formule

   [Fe^{II}₂ₙFe^{III}ₙ(OH)₆ₙ]ⁿ⁺[Aⁿ⁻,mH₂O]ⁿ⁻

   dans laquelle Aⁿ⁻ est un anion de charge n,
- oxydation complète et rapide par H₂O₂ ou O₂ pur dans la solution dudit hydroxysel ferreux ferrique, pour obtenir un oxyhydroxysel ferrique de formule

   [Fe^{III}₃ₙO₆ₙH₄ₙ]ⁿ⁺[Aⁿ⁻,mH₂O]ⁿ⁻
- ajout dudit support dans ladite solution, pour obtenir un support recouvert de l'oxyhydroxysel ferrique en solution, et
- filtration et séchage dudit support recouvert de l'oxyhydroxysel ferrique en solution, pour obtenir ledit support recouvert d'un oxyhydroxysel ferrique.

La description concerne également un support recouvert d'un oxyhydroxysel ferrique de formule [Fe^{III}₃ₙO₆ₙH₄ₙ]ⁿ⁺[Aⁿ⁻,mH₂O]ⁿ⁻, dans laquelle Aⁿ⁻ est un anion de charge n, et m est un nombre entier variant de 1 à 10, notamment de 1 à 4, avantageusement 3, tel qu'obtenu par la mise en œuvre du procédé comprenant :
- la mise en présence en solution d'ions Fe^{II} et Fe^{III}, d'anions Aⁿ⁻, de H₂O₂ ou O₂ et de support, et
- la coprécipitation desdits ions Fe^{II} et Fe^{III} en présence d'anions Aⁿ⁻ et une oxydation immédiate simultanée par H₂O₂ ou O₂, pour obtenir ledit support recouvert de l' oxyhydroxysel ferrique de formule

   [Fe^{III}₃ₙO₆ₙH₄ₙ]ⁿ⁺[Aⁿ⁻,mH₂O]ⁿ⁻.

Dans un mode de réalisation particulier, La description décrit un support recouvert d'un oxyhydroxycarbonate ferrique de formule [Fe^{III}₆O₁₂H₈]²⁺[CO₃²⁻,3H₂O]²⁻, tel qu'obtenu par la mise en œuvre du procédé comprenant les étape de :
- coprécipitation en solution d'ions Fe^{II} et Fe^{III} en présence d'anions carbonate en l'absence d'oxygène, pour obtenir un hydroxycarbonate ferreux ferrique de formule

   [Fe^{II}₄Fe^{III}₂(OH)₁₂]²⁺[CO₃²⁻,3H₂O]²⁻,
- oxydation complète et rapide par ajout de H₂O₂ ou O₂ pur dans la solution ou à l'air dudit hydroxycarbonate ferreux ferrique sec après séchage, pour obtenir un oxyhydroxycarbonate ferrique de formule

   [Fe^{III}₆O₁₂H₈]²⁺[CO₃²⁻,3H₂O]²⁻,
- séchage dudit oxyhydroxycarbonate ferrique, pour obtenir un oxyhydroxycarbonate ferrique sec, et
- mélange de l'oxyhydroxycarbonate ferrique sec avec ledit support, pour obtenir ledit support recouvert de l'oxyhydroxycarbonate ferrique.

Après l'étape de mélange, le support recouvert de l'oxyhydroxysel ferrique peut être lavé, notamment à l'eau distillée.

Dans un mode de réalisation particulier, la description concerne un support recouvert de l'oxyhydroxycarbonate ferrique de formule [Fe^{III}₆O₁₂H₈]²⁺[CO₃²⁻,3H₂O]²⁻ tel qu'obtenu par la mise en œuvre du procédé comprenant les étape de :
- coprécipitation en solution d'ions Fe^{II} et Fe^{III} en présence d'anions carbonate en l'absence d'oxygène, pour obtenir un hydroxycarbonate ferreux ferrique de formule

   [Fe^{II}₄Fe^{III}₂(OH)₁₂]²⁺[CO₃²⁻,3H₂O]²⁻,
- oxydation complète et rapide par H₂O₂ ou O₂ pur dans la solution dudit hydroxycarbonate ferreux ferrique, pour obtenir un oxyhydroxycarbonate ferrique de formule

   [Fe^{III}₆O₁₂H₈]²⁺[CO₃²⁻,3H₂O]²⁻,
- ajout dudit support dans ladite solution, pour obtenir un support recouvert de l'oxyhydroxycarbonate ferrique en solution, et
- filtration et séchage dudit support recouvert de l'oxyhydroxycarbonate ferrique en solution, pour obtenir ledit support recouvert d'oxyhydroxycarbonate ferrique.

Dans un mode de réalisation particulier, la description décrit un support recouvert d'oxyhydroxycarbonate ferrique de formule [Fe^{III}₆O₁₂H₈]²⁺[CO₃²⁻,3H₂O]²⁻, tel qu'obtenu par la mise en œuvre du procédé comprenant :
- la mise en présence en solution d'ions Fe^{II} et Fe^{III}, d'anions carbonate, de H₂O₂ ou O₂ et dudit support, et
- la coprécipitation desdits ions Fe^{II} et Fe^{III} en présence d'anions carbonate et une oxydation immédiate simultanée par H₂O₂ ou O₂ pur, pour obtenir ledit support recouvert de l'oxyhydroxycarbonate ferrique de formule [Fe^{III}₆O₁₂H₈]²⁺[CO₃²⁻,3H₂O]²⁻.

La présente description concerne également un kit comprenant :
au moins un HDL, ledit HDL comportant un cation bivalent M²⁺ partiellement ou totalement substitué par Fe^{II}, et un cation trivalent T³⁺ éventuellement substitué par Fe^{III}, de formule générale suivante :

   [M²⁺_{(z)}Fe^{II}_{(1-y-z)}T³⁺ₜFe^{III}_{(y-t)}O₂H₂]ⁿ⁺[(y/n)Aⁿ⁻,mH₂O]ⁿ⁻

   dans laquelle :
   1/4 <y<1/3, z<1-y et t<y, Aⁿ⁻ est un anion de charge n, n prenant les valeurs 1, 2 ou 3, notamment 2, m est un nombre entier variant de 1 à 10,
   notamment de 1 à 4, avantageusement 3,
   et le rapport x = (y-t)/(1-z-t) pouvant varier de 0 à 1, notamment 1, sous forme cristalline,
      - au moins un support, notamment choisi parmi le sable, de l'argile, des billes de polymère,
pour une utilisation simultanée, séparée ou étalée dans le temps, destinée à la mise en œuvre d'un procédé de dépollution d'un milieu à traiter.

La présente description décrit notamment un kit tel que défini ci-dessus dans lequel ledit HDL est un oxyhydroxysel ferreux ferrique et comprenant :
- au moins un oxyhydroxysel ferreux ferrique ayant la formule :

   [Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻

   dans laquelle Aⁿ⁻ est un anion de charge n, n prenant les valeurs 1, 2 ou 3, notamment 2, m est un nombre entier variant de 1 à 10, notamment de 1 à 4, avantageusement 3 et x est compris de 0 à 1, sous forme cristalline,
- au moins un support, notamment choisi parmi le sable, de l'argile, des billes de polymère,
pour une utilisation simultanée, séparée ou étalée dans le temps, destinée à la mise en œuvre d'un procédé de dépollution d'un milieu à traiter.

Dans un kit préféré selon la description, l'oxyhydroxysel ferreux ferrique est un l'oxyhydroxycarbonate ferreux ferrique de formule :

[Fe^{II}₆₍₁₋ₓ₎Fe^{III}₆ₓO₁₂H₂₍₇₋₃ₓ₎]²⁺[CO₃²⁻,3H₂O]²⁻.

La description décrit particulièrement un kit tel que défini ci-dessus dans lequel l'oxyhydroxysel ferreux ferrique est un oxyhydroxysel ferrique de formule :

[Fe^{III}₃ₙO₆ₙH₄ₙ]ⁿ⁺[Aⁿ⁻,mH₂O]ⁿ⁻.

Il s'agit de la forme totalement oxydée de l'oxyhydroxysel ferreux ferrique

Dans un autre kit préféré selon la description, l'oxyhydroxysel ferreux ferrique est un oxyhydroxycarbonate ferrique de formule :

[Fe^{III}₆O₁₂H₈]²⁺[CO₃²⁻,3H₂O]²⁻.

La description concerne également l'utilisation d'un produit tel que défini ci-dessus ou d'un kit tel que défini ci-dessus, pour la mise œuvre d'un procédé permettant la réduction catalytique d'une substances S en une substance S_{réduit}, le potentiel rédox du couple S_{réduit} /S étant supérieur à celui du couple Fe^{II}/Fe^{III} aux sites cristallographiques du Fe^{II}.

La description concerne particulièrement l'utilisation d'un produit tel que défini ci-dessus ou d'un kit tel que défini ci-dessus, pour la mise en œuvre d'un procédé de dépollution d'un milieu à traiter.

Dans un mode de réalisation préféré, la description décrit l'utilisation d'un produit tel que défini ci-dessus ou d'un kit tel que défini ci-dessus, pour limiter la prolifération excessive d'algues, en particulier les ulves.

L'invention peut être mise en place dans le cadre d'un aménagement territorial, afin de réapproprier globalement la qualité des eaux dans l'environnement et créer des zones aménagées où cette domestication permettrait d'améliorer les conditions naturelles de dénitrification. Ces aménagements s'apparentent aux techniques d'infiltration/percolation dans des massifs saturés en eau à traiter qui pourraient être associés à du lagunage et sont dorénavant appelées « Zone Humide à Epuration Renforcée par le Fer, (ZHERF)», en anglais «Waterlogged Areas Reinforced by Iron Purification (WARIP)».

Les matières de départ utilisées pour les espèces ferriques ne peuvent plus être de façon réaliste l'oxyhydroxycarbonate ferrique de synthèse comme dans le cas des réacteurs précédents étant donnée la quantité de produit nécessaire. Les matières de départ utilisées sont ainsi constituées d'oxyhydroxydes ferriques naturels tels qu'on les trouve dans les minerais de fer, auxquels est ajoutée de la matière organique sous forme de compost. Le consortium bactérien naturel présent dans le compost est suffisant pour amorcer les réactions d'oxydoréduction.

Des minéraux inertes peuvent être ajoutés afin d'augmenter l'état de division des oxyhydroxydes ferriques, en vue de servir de support aux cristaux de la phase réactive qui ne manquera pas de se former. Leur nature minérale, goethite, lépidocrocite, ferrihydrite etc... importe peu puisque la réduction bactérienne remplace par dissolution-précipitation les oxyhydroxyferriques initiaux.

L'invention peut être utilisée dans un lysimètre installé dans un site approprié.

En effet, les taux de nitrates élevés en Bretagne sont responsables des dysfonctionnements concernant la prolifération des algues vertes. Aussi le procédé de réduction catalytique des nitrates selon l'invention peut être utilisé dans des lieux récemment pollués par les algues vertes, tel que Trestel, ou des lieux totalement pollués, comme la grève de la baie de Saint Michel en Grève.

### DESCRIPTION DES FIGURES

**Figure 1****:** Schéma de principe du fonctionnement du catalyseur selon l'invention, l'oxyhydroxysel ferreux ferrique, pour la mise en œuvre d'un procédé d'oxydoréduction permettant la réduction d'une substance S.
   Les bactéries ferri-réductrices dissimilatrices, en anglais DIRB (*Dissimilatory Iron Reducing Bacteria*) oxydent la matière organique (CH₂O) au cours de leur respiration en CO₃²⁻ (1). L'accepteur final d'électrons de la chaîne respiratoire bactérienne est représenté par Fe^{III} qui est ainsi réduit en Fe^{II} au sein même du catalyseur (l'oxyhydroxysel ferreux ferrique).
   Cette réaction d'oxydation de la matière organique est couplée à une réduction d'une substance S en une substance S_{réduit} par oxydation de Fe^{II} en Fe^{III} (2).
   Fe^{III} issu de la réduction de la substance S régénère ainsi en permanence le Fe^{II} via la respiration bactérienne et le catalyseur est pérennisé, au cours d'un cycle catalytique lithotrophique (3).
   L'oxydation catalytique organobactérienne est donc couplée à la réduction catalytique de la substance S.
   Les éléments grisés appartiennent au catalyseur, l'oxyhydroxysel ferreux ferrique, au sein duquel Fe^{III} représente le site catalytique oxydant (l'anode) et Fe^{II} le site catalytique réducteur (cathode).
**Figure 2** **:** Micrographie au microscope à balayage (SEM) montrant des bactéries ferri-réductrices (*Shewanella putrefaciens*) respirant au contact de l'oxyhydroxycarbonate ferreux ferrique. Les bactéries s'arriment au cristal de forme prismatique à base hexagonale avec des filaments facilitant le transfert d'électrons. A plus ou moins long terme se crée un biofilm.
**Figure 3** **:** Principe de la réduction catalytique des nitrates selon l'invention.
   Les bactéries ferri-réductrices dissimilatrices (DIRB) oxydent la matière organique (CH₂O) en CO₃²⁻ au cours de leur respiration (1). L'accepteur final d'électrons de la chaîne respiratoire bactérienne est représenté par Fe^{III} qui est ainsi réduit en Fe^{II} au sein même du catalyseur (l'oxyhydroxycarbonate ferreux ferrique).
   La respiration bactérienne est couplée à une réduction des nitrates (NO₃⁻) par oxydation de Fe^{II} en Fe^{III} (2). Les nitrates sont réduits en diazote (N₂), permettant par exemple la dénitrification d'un milieu.
   Le Fe^{III} issu de la réduction des nitrates régénère ainsi en permanence le Fe^{II} via la respiration bactérienne et le catalyseur est pérennisé, au cours d'un cycle catalytique lithotrophique (3).
   L'oxydation catalytique organobactérienne est alors couplée à la réduction catalytique des nitrates.
   Les éléments grisés appartiennent au catalyseur, ici l'oxyhydroxycarbonate ferreux ferrique, au sein duquel Fe^{III} représente le site catalytique oxydant (l'anode) et Fe^{II} le site catalytique réducteur (cathode).

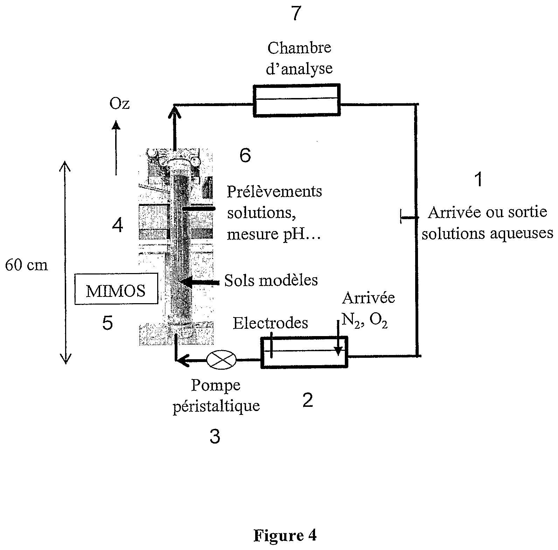

**Figure 4** **:** Réacteur en colonne utilisé au laboratoire pour évaluer la réduction de la substance S par le catalyseur selon le procédé de l'invention.
   Le réacteur utilisé comprend une colonne (4) d'environ 60 cm qui est remplie d'un milieu modèle, en condition d'anoxie. Ce milieu comprend en particulier le catalyseur selon l'invention, des bactéries ferriréductrices et de la matière organique.
   La solution liquide à traiter comportant la substance S est introduite dans le système par l'arrivée (1) s'écoulant jusqu'à une cuve (2) dans laquelle sont placées des électrodes de mesure (pH et potentiel) et une arrivée de gaz (N₂ et O₂). L'arrivée de gaz est utilisée pour maîtriser les conditions d'anoxie.
   La solution liquide à traiter est entraînée par une pompe péristaltique (3) à travers la colonne dans un mode ascendant. En sortie de colonne, le milieu traité est entraîné dans une chambre d'analyse (7) qui sert à évaluer l'efficacité du procédé, puis jusqu'à la sortie (1) où le milieu est soit récupéré, soit recyclé dans le système.
   MIMOS (5) est un spectromètre Mössbauer miniaturisé construit à l'Université de Mayence (Dr. G. Klingerhöffer). Il s'agit d'un clone du spectromètre Mössbauer miniaturisé, sonde envoyée sur Mars afin d'y analyser les oxydes de fer (Programmes NASA et ESA). MIMOS permet d'analyser *in situ* le rapport x = Fe^{III} / Feₜₒₜₐₗ à l'intérieur du catalyseur en semi continu.
   Oz indique l'axe vertical.
   A la sortie (6) du système peuvent être réalisés des prélèvements de solution et effectués diverses mesures.
   Il est également possible d'utiliser la colonne en flux descendant.

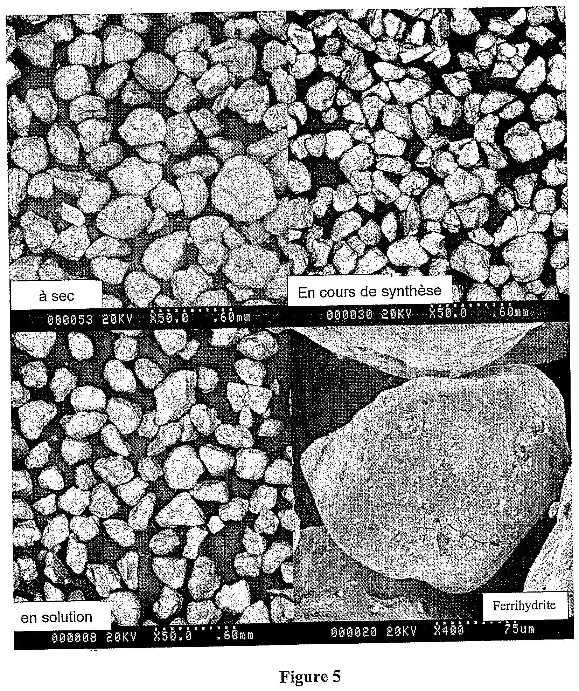

**Figure 5** **:** Photos d'un support de type sable (silice polycristalline) recouvert du précurseur du catalyseur, l'oxyhydroxycarbonate ferrique, de formule [Fe^{III}₆O₁₂H₈]²⁺CO₃²⁻ selon l'invention.
   Les termes « à sec », « en solution », et « en cours de synthèse » correspondent aux types de dépôt possibles, respectivement une préparation à sec, en solution et en cours de synthèse.
   Le dépôt de catalyseur correspond aux plages blanchâtres que l'on discerne à la surface du grain de sable considérablement grossi. La qualité de ce revêtement est primordiale dans le procédé.

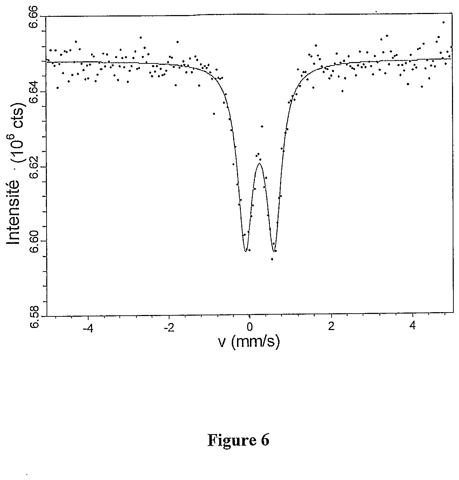

**Figure 6** **:** Spectre Mössbauer mesuré *in situ* grâce à MIMOS à la surface de sable revêtu par l'oxyhydroxycarbonate ferrique identifiant clairement la présence exclusive de ce dernier en comparant l'intensité des pics selon le type de préparation du revêtement.

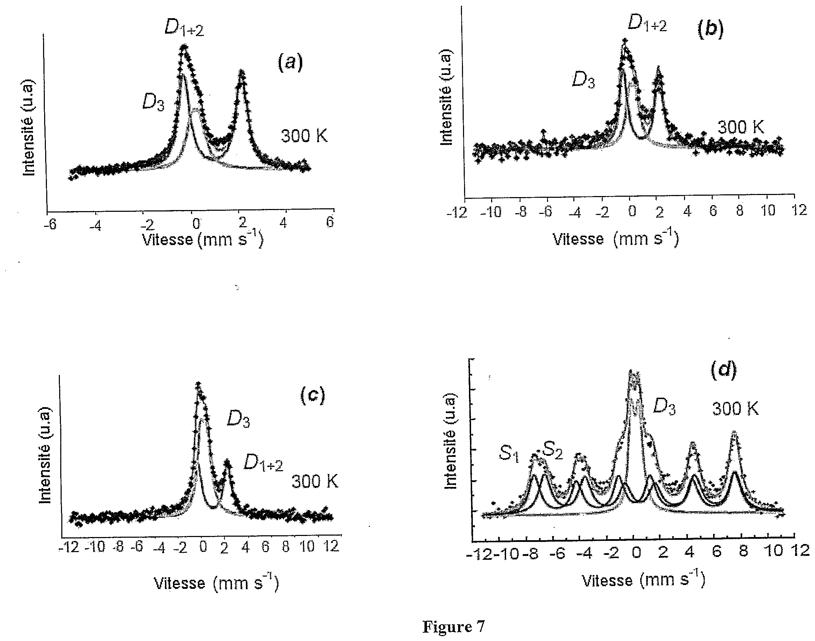

**Figure 7** : Spectres Môssbauer mesurés in situ à l'ambiante par réflexion avec MIMOS de :
   Fig. 7(a): GR(CO3²⁻) initial à *x* = 0.33,
   Fig. 7(b): GR(CO3²⁻)* à *x* = 0.38 après oxydation par les nitrates, 1 jour,
   Fig. 7(c): GR(CO3²⁻)* à *x* = 0.58 après oxydation par les nitrates, 11 jours,
   Fig. 7(d): Magnetite + GR(CO3²⁻)* à *x* = 1 après oxydation par les nitrates, 1 mois.

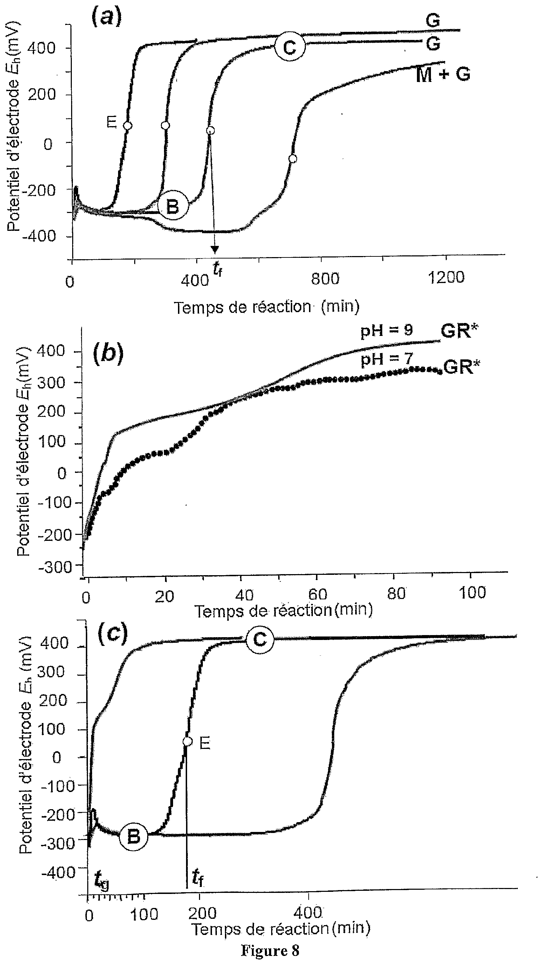

**Figure 8** **:** Potentiel d'électrode en fonction du temps d'une solution contenant de l'hydroxycarbonate dans laquelle barbote un courant azote-oxygène sous agitation de 375 rpm.
   Fig. 8(a): Augmentation du taux d'oxygène (air) dans un flux de N₂-O₂. Le taux d'oxygène est respectivement, pour les quatre courbes de droite à gauche, 2,7%, 6,7%, 13,3% et 20%. Les lettres B et C cerclées correspondent à des plateaux atteints. (G = Goethite et M = Magnétite)
   Fig. 8(b): Oxydation à l'air avec une agitation de 1500 rpm et un pH de 7 (courbe inférieure) ou 9 (courbe supérieure) (GR*= oxyhydroxycarbonate).
   Fig. 8(c): Représentation à la même échelle des cinétiques obtenues en Fig. 8(b) (courbe de gauche) et en Fig. 8(a) (courbe du milieu, taux de O2 = 20% et courbe de droite, taux de O₂= 6,7%).

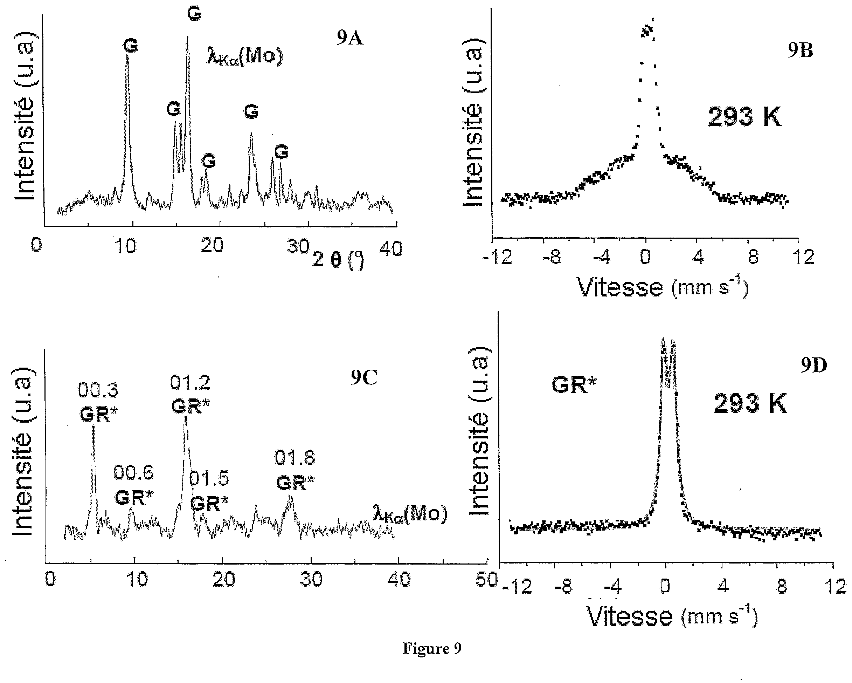

**Figure 9** **:** Diffraction des rayons X et spectrométrie Mössbauer des produits obtenus dans l'exemple 4 :
   Fig. 9a et 9c : Diffraction des rayons X et spectrométrie Mössbauer, respectivement du produit de la figure 8a (20% de O₂),
   Fig. 9b et 9d : Diffraction des rayons X et spectrométrie Mössbauer, respectivement, du produit de la figure 8b.

### EXEMPLES

Les expériences concernant la présente invention se déclinent en cinq phases opérationnelles associant recherche appliquée en laboratoire, expérimentation en hall d'essais et démonstrateur de terrains.

Le premier exemple concerne un mode de réalisation préféré de la préparation du catalyseur.

Le deuxième exemple a pour objet le développement d'un nouveau procédé de chimie douce utilisant un catalyseur de synthèse où la dénitrification se fait dans une installation fermée et pouvant être décliné en plusieurs versions et formats selon le besoin recherché. L'exemple 3 est conforme à l'invention. Les autres exemples sont des exemples de référence.

### EXEMPLE 1 : Préparation du catalyseur

### Matériel et Méthodes

### a) Précurseur du catalyseur sans substrat

L'hydroxycarbonate ferreux ferrique [Fe^{II}₄Fe^{III}₂(OH)₁₂]²⁺CO₃²⁻ est préparé par synthèse chimique, soit par oxydation d'un précipité de Fe(OH)₂ en présence d'ions carbonate comme décrit par Génin et al. (2006, Geoscience), soit par co-précipitation des ions Fe^{II} et Fe^{III} en présence d'anions comme décrit par Ruby et al. (2006, Geoscience). Cet hydroxycarbonate ferreux ferrique est alors déprotoné complètement avec un oxydant violent tel que H₂O₂ en excès ou à l'air après séchage, comme décrit dans Génin et al. (2006, Geoscience) pour former l'oxyhydroxycarbonate ferrique de formule [Fe^{III}₆O₁₂H₈]²⁺CO₃²⁻ qui servira de précurseur au catalyseur l'oxyhydroxycarbonate ferreux ferrique de formule générale [Fe^{II}₆₍₁₋ₓ₎Fe^{III}₆ₓO₁₂H₂₍₇₋₃ₓ₎]²⁺CO₃²⁻ dans le domaine où x est compris entre 0,33 et 0,66.

Le passage du précurseur du catalyseur au catalyseur se fait ultérieurement lors de la mise régime par réduction bactérienne *in situ* sans modification ni de la structure ni de la morphologie.

Le produit obtenu est caractérisé par diffraction des rayons X, spectrométrie Mössbauer, spectrométrie de vibration (Raman ou infra rouge), microscopie électronique par transmission.

### b) Support recouvert du catalyseur

Le revêtement du précurseur du catalyseur, ici l'oxyhydrocarbonate ferrique [Fe^{III}₆O₁₂H₈]²⁺CO₃²⁻, est obtenu en déposant le précurseur sur un support « à sec » ou « en solution », ou en ajoutant le support en même temps qu'est synthétisé le précurseur.

Le protocole de la préparation « à sec » est le suivant :
- coprécipitation en solution d'ions Fe^{II} et Fe^{III} en présence d'anions carbonate, pour obtenir l'hydroxycarbonate ferreux ferrique de formule

   [Fe^{II}₄Fe^{III}₂(OH)₁₂]²⁺CO₃²⁻,
- oxydation complète et rapide par H₂O₂ en excès dans la solution ou à l'air après séchage dudit hydroxycarbonate ferreux ferrique sec, pour obtenir le précurseur : l'oxyhydroxycarbonate ferrique de formule

   [Fe^{III}₆O₁₂H₈]²⁺CO₃²⁻,
- filtration puis séchage parfait dudit oxyhydroxycarbonate ferrique, pour obtenir un oxyhydroxycarbonate ferrique sec, et
- mélange mécanique de l'oxyhydroxycarbonate ferrique sec avec ledit substrat à sec, pour obtenir ledit substrat recouvert de l'oxyhydroxycarbonate ferrique, et
- lavage à l'eau distillé du support avec son dépôt.

Le protocole de la préparation « en solution » est le suivant :
- coprécipitation en solution d'ions Fe^{II} et Fe^{III} en présence d'anions carbonate, pour obtenir l'hydroxycarbonate ferreux ferrique de formule

   [Fe^{II}₄Fe^{III}₂(OH)₁₂]²⁺CO₃²⁻,
- oxydation complète et rapide par H₂O₂ en solution dudit hydroxycarbonate ferreux ferrique, pour obtenir l'oxyhydroxycarbonate ferrique de formule

   [Fe^{III}₆O₁₂H₈]²⁺CO₃²⁻,
- ajout dudit substrat dans ladite solution, pour obtenir un substrat recouvert de l'oxyhydroxycarbonate ferrique en solution, et
- filtration et séchage dudit substrat recouvert de l'oxyhydroxycarbonate ferrique en solution, pour obtenir ledit substrat recouvert du précurseur l'oxyhydroxycarbonate ferrique sec.

Dans la préparation « à sec » et « en solution », les conditions de l'essai présenté concernent une centaine de grammes de sable avec quelques grammes d'oxyhydroxycarbonate ferrique sec. Le mélange se fait sans précautions particulières, à température ambiante, puisque le précurseur est totalement ferrique et ne craint donc aucune oxydation ultérieure. L'excès de précurseur est récupéré et il est très important d'avoir un rapport volumique support/précurseur d'environ 1000. Le support une fois recouvert du précurseur est lavé à l'eau distillée. Pour autant, ce dernier reste accroché à la surface du support comme on le voit sur la micrographie de la figure 5 en une couche très fine (difficile à évaluer néanmoins) ce qui présage d'une bonne efficacité pour le futur catalyseur qui doit présenter une grande surface développée.

Le protocole de la préparation au cours de la synthèse du catalyseur est le suivant :
- mise en présence en solution d'ions Fe^{II} et Fe^{III}, d'anions carbonates, de H₂O₂ et dudit substrat, et
- coprécipitation desdits ions Fe^{II} et Fe^{III} en présence d'anions carbonates et une oxydation immédiate simultanée par H₂O₂, pour obtenir ledit substrat recouvert de l' oxyhydroxycarbonate ferrique de formule [Fe^{III}₆O₁₂H₈]²⁺CO₃²⁻.

### Résultats

Le premier protocole avec l'oxyhydroxycarbonate ferrique séché et déposé à sec sur les grains de sable donne le meilleur résultat, comme l'atteste l'intensité des pics obtenus par spectrométrie Mössbauer (figure 6). La quantité de fer déposé est plus abondante, la couche de précurseur est plus épaisse et sa répartition plus uniforme.

La pérennité dans un réacteur à l'issue de la réaction est également vérifiée.

### EXEMPLE 2 : Développement d'un procédé de chimie douce pour la dénitrification en installation fermée

### Phase 1 : Expérimentation en laboratoire sur une quantité réduite de matière réactive (environ 1 kg).

### Matériel et Méthodes

Le support (le sable ou les argiles) recouvert du précurseur l'oxyhydroxycarbonate ferrique (x=1) est préparé comme décrit dans l'exemple 1.

### a) Obtention du catalyseur

Après fabrication du précurseur sur son support, ce dernier est remis en solution avec les bactéries ferriréductrices et la matière organique, afin que s'opère la réduction bactérienne du Fe^{III} en Fe^{II} au sein même du précurseur (figures 1 et 2). Contrairement au cas où les espèces ferriques seraient celles d'un autre précurseur, un quelconque oxyhydroxyde ferrique FeOOH, il n'y a pas ici dissolution du précurseur puis reprécipitation du catalyseur ailleurs. Le catalyseur qui se forme reste physiquement là où le dépôt de précurseur sur le support a été accroché. Ceci est capital car la morphologie en couche superficielle sur les grains de sable est conservée et la disposition optimale recherchée pour la catalyse est effectivement obtenue à l'issue de la fabrication du précurseur. Or cette disposition n'est pas obligatoirement celle que l'on observe dans les sols naturels. En utilisant la forme totalement oxydée de même structure que le catalyseur en tant que précurseur, le procédé en réacteur est a priori plus efficace que celui qui se passe en conditions naturelles.

La formation du catalyseur *in situ* à partir du précurseur est suivi *sur place* grâce au spectromètre MIMOS (Miniaturized Mössbauer Spectrometer). Il n'y a pas d'intervention puisque les rayons γ utilisés pour mesurer les spectres traversent la paroi du réacteur. La caractérisation est donc semi continu (un spectre peut demander une journée de comptage alors que le processus de réduction bactérienne prend, ordre de grandeur, une semaine dans un bêcher).

### b) Réduction catalytique des nitrates

La cinétique de réduction des nitrates en solution par le catalyseur est étudiée grâce au dispositif de la figure 4.

Les eaux utilisées dans l'expérience sont des eaux de source de différentes natures, dopées en nitrates pour simuler des eaux de forage. La teneur en nitrate est typiquement fixée à 100 mg/l. Plusieurs débits d'écoulement sont testés afin de connaître les limites opérationnelles.

Des eaux usées après décantation et traitement de coagulation/floculation (eau chargée en DCO, MO, Nitrates) sont également testées pour simuler le cas des eaux usées urbaines après traitement secondaire ou des eaux issues de fosses septiques.

Tous ces essais font l'objet d'un suivi des divers paramètres permettant d'évaluer l'efficacité du traitement au delà du suivi classique du pH, de la température, et du potentiel Redox ; en particulier un suivi, en continu autant que possible, des concentrations des diverses espèces formées est systématiquement recherché : analyses des espèces azotées, carbonées et espèces du fer où la spectrométrie Mössbauer par réflexion MIMOS procure le rapport Fe^{III}/Feₜₒₜₐₗ observé *in situ* dans le catalyseur.

### Résultats

La concentration en azote est analysée sous ses formes nitrate, azote gazeux, nitrite, ammonium. Les résultats obtenus permettent de conclure que la présence des formes nitrite et ammonium est négligeable.

Les résultats obtenus montrent que le produit catalytique permet la réduction des nitrates présents dans un milieu à traiter.

### Phase 2 : Expérimentation en hall d'essais sur une quantité significative de produit réactif

### Matériel et Méthodes

L'étude porte sur la mise en œuvre d'une quantité de l'ordre de 100 kg d'oxyhydroxysel ferreux ferrique, dans une colonne à l'échelle des pilotes de la plate-forme technologique de NanCIE (Centre International de l'Eau de Nancy) à Laneuveville devant Nancy.

Le protocole de suivi et de caractérisation des espèces est identique à celui de la première phase. En particulier, le comportement et l'évolution au cours du temps du revêtement réactif sont analysés pour évaluer la durabilité du procédé mis en œuvre.

Le site de Laneuveville permet de traiter trois grandes catégories d'eaux :
- eau potable
- eau de forage,
- eau de rivière particulièrement saline, et
- eau usée urbaine classique.

Ces eaux sont caractérisées en teneur en nitrate et dopées en fonction des concentrations recherchées.

### Phase 3 : Expérimentation sur site en Bretagne de la réduction du taux de nitrate : production d'eau potable, traitement des eaux usées (Perros-Guirec ou Trégastel)

Les trois expériences pilotes, en Bretagne, permettant l'abattement des nitrates sont les suivantes:
- production d'eau potable : l'expérimentation porte sur une production d'environ 10 m³/jour, correspondant à 50 habitants équivalents,
- assainissement semi-collectif type fosse-septique, avec traitement complémentaire des eaux avant infiltration dans les sols (habitat rural dispersé),
- traitement des eaux usées urbaines adapté aux petites stations d'épuration (boues activées ou lagunage) déficient dans le traitement de l'azote, le flux traité étant équivalent à 10 m³/jour.

Un dimensionnement pour une épuration équivalente à une cinquantaine de maisons est visé. Des réacteurs de ce type ont été mis au point dans le hall expérimental de la plate-forme technologique de Laneuveville-devant-Nancy par NanCIE.

Il est vérifié que la réaction de réduction des nitrates est maîtrisée à volonté et aboutit uniquement à la formation d'azote gazeux, et non à la formation de nitrite ou d'ammonium.

### EXEMPLE 3 : Déprotonation de l'oxyhydroxycarbonate ferreux (GR) lors de la réduction des nitrates et rôle du cuivre et du phosphate.

Un mélange de sels de FeSO₄·7H2O et de Fe₂SO₄·5H2O est dissout dans 100 mL d'eau déminéralisée ([Fe] = 0.4 M) sous un barbotage continu de N₂.

GR(CO3²⁻) à *x* = 0.33 est précipité en ajoutant progressivement une solution de Na₂CO₃ au mélange initial jusqu'à ce que le pH atteigne une valeur de 9.5. Puis, une petite quantité de sels de Na₂HPO₄·12H₂O et de CuSO₄·5H₂O est dissoute dans la suspension ([PO₄] = 4×10⁻³ M and [Cu^{II}] = 4×10⁻² M). Les anions phosphate sont utilisés pour stabiliser la structure GR. Les cations Cu^{II} sont ajoutés de manière à accélérer la cinétique d'oxydation comme proposé par Ottley et al. (Geochimica et Cosmochimica acta, 1997, 61(9), p.1819-1828), qui ont étudié la réduction du nitrate par l'hydroxyde ferreux.

A cette étape, le GR(CO₃²⁻) stoechiométrique possède la formule [Fe^{II}₄Fe^{III}₂(OH)₁₂ ]²⁺ · [CO₃²⁻ · 3H₂O]²⁻. L'oxydation de GR(CO₃²⁻) commence par l'addition d'une solution de NaNO₃ ([NO₃⁻] = 0.8 M) dans la suspension. La réaction dure moins d'un mois.

Des précipités sont prélevés périodiquement par filtration sous atmosphère de N₂. Ils sont introduits dans un support pour permettre leur caractérisation en utilisant la réémission de rayonnement γ de 14.4 keV avec un spectromètre Mössbauer miniaturisé (MIMOS), à température ambiante, dans une géométrie de réflexion arrière.

### Résultats :

Les résultats sont présentés dans la figure 7 et le Tableau 1 :

| **Tableau 1:** Paramètres hyperfins de Mössbauer mesurés à température ambiante des échantillons de GR(CO3²⁻) qui sont oxydés in situ par les nitrates : Fig (7a) GR(CO3²⁻) initial, Fig (7b) 1jour en présence de NO³⁻, Fig (7c) 11 jours en présence de NO³⁻, Fig (7d) 1 mois en présence de NO³⁻. | | | | | | | | | | | | | |
|---|---|---|---|---|---|---|---|---|---|---|---|---|---|
| | GR(CO3²⁻) | | | GR(CO3²⁻)* | | | GR(CO3²⁻)* | | | GR(CO3²⁻)* | | | |
| x | | 0,33 | | | 0,38 | | | 0,58 | | | | 1 | |
| Fig, | | 7a | | | 7b | | | 7c | | | 7d | 7d | |
| T | 300 K | | | 300 K | | | 300 K | | | 300 K | | | |
| | δ | Δ | *RA* | δ | Δ | *RA* | δ | Δ | *RA* | δ | Δ | *H* | *RA* |
| | (mm s⁻¹) | | (%) | (mm s⁻¹) | | (%) | (mm s⁻¹) | | (%) | (mm s⁻¹) | | (kOe) | (%) |
| **D₁₊₂** | 1,1 2 | 2,4 | 67 | 0,98 | 2,6 | 62 | 1,0 3 | 2,53 | 42 | | | | |
| **D₃** | 0,4 1 | 0,35 | 33 | 0,37 | 0,49 | 38 | 0,3 1 | 0,55 | 58 | 0,40 | 0,5 7 | | 20 |
| **S₁** | | | | | | | | | | 0,27 | | 463 | 39 |
| **S₂** | | | | | | | | | | 0,67 | | 440 | 41 |
| δ : Déplacement de l'isomère en mm s⁻¹ (Référence : Fe α métallique à température ambiante); | | | | | | | | | | | | | |
| Δ : division en quadrupôle en mm s⁻¹; *H* : champ hyperfin en kOe ; *RA* : proportion relative en %. | | | | | | | | | | | | | |
| La demi largeur à mi hauteur est d »'environ 0,7 mm s⁻¹. | | | | | | | | | | | | | |

Deux doublets quadrupolaires provenant seulement d'oxyhydroxycarbonate GR(CO3²⁻ )* avec D₁₊₂ (Fe^{II}) et D₃ (Fe^{III}). L'intensité de D₃ donne *x* directement = 0,33, 0,38 et 0,58. (d) mélange de magnétite et GR* ferrique.

L'oxydation se fait in situ jusqu'à ce que au-delà de x = 0,67 GR* se décompose en partie en Magnétite. Une partie de l'oxyhydroxycarbonate atteint néanmoins x = 1.
Le cuivre accélère notablement la réduction des nitrates et le phosphate stabilise la rouille verte vis-à-vis de la magnétite.

Sans le cuivre la réaction est particulièrement lente (∼ deux ordres de grandeur). Cu joue donc le rôle de catalyseur vis-à-vis du fer.

### EXEMPLE 4 : Etude de la déprotonation de l'oxyhydroxycarbonate ferreux (GR)

Les conditions d'oxydation in situ par déprotonation et celles par dissolution-reprécipitation conduisant aux rouilles communes, les oxyhydroxydes ferriques débarrassées des carbonates tels que ferrihydrite, lépidocrocite ou goethite ont été étudiées.

En particulier, le flux d'oxygène a été augmenté progressivement et a permis de passer d'un régime à l'autre.

Ceci est illustré par la figure 8 où le potentiel d'électrode est reporté en fonction du temps dans le bécher où on agite avec un barreau magnétique la solution contenant de l'hydroxycarbonate dans laquelle barbote un mélange azote-oxygène :
Sur la Fig. 8a, on augmente (de droite à gauche) le taux d'oxygène de 2,7 - 6,7- 13,3 à 20 % (l'air) dans un flux N₂-O₂ de 2,3 × 10⁻³ L s⁻¹ avec une agitation constante du barreau magnétique de 375 rpm. On distingue 2 plateaux B et C qui correspondent à l'oxydation progressive de la rouille verte en ferrihydrite puis goethite. On remarque entre autre qu'en augmentant le taux d'oxygène, l'oxydation caractérisée par le point équivalent E devient de plus en plus rapide passant d'environ 700 min à 200 min. La première courbe, la plus lente à 2,7 % d'O₂, donne comme produit de la magnétite et de la goethite montrant qu'alors du Fe²⁺ reste tel quel et s'incorpore au solide formant ainsi de la magnétite.

Au début du premier palier B apparaît un crochet de plus en plus marqué (voir ci-dessous) quand le taux d'oxygène augmente.

Sur la Fig. 8b : on oxyde à l'air mais avec une agitation 4 fois plus importante avec une agitation de 1500 rpm au lieu de 375. Deux expériences sont effectuées : pH9 et pH7. Le potentiel d'électrode augmente de façon continue ce qui est caractéristique de l'oxydation in situ avec la formation de l'oxyhydroxycarbonate où x passe progressivement de 0,33 à 1. La courbe ressemble tout à fait à celle obtenue en oxydant avec H₂O₂. Le temps de moitié de réaction ne dépasse pas 10 min à comparer aux 200 min précédentes. Par conséquent, la déprotonation in situ sans relarguer les carbonates du solide est beaucoup plus rapide que la dissolution-reprécipitation. Le pH ne joue qu'un rôle peu significatif.

Sur la Fig. 8c : à la même échelle de temps sont représentées les cinétiques des deux modes d'oxydation. Cette superposition des courbes permet d'expliquer le crochet évoqué ci-dessus. Même lorsque l'oxydation n'est pas très vigoureuse, au début cette dernière se fait in situ jusqu'à ce que la dissolution-reprécipitation prenne le dessus. C'est un problème de cinétique.

La figure 9 montre bien que les produits finals d'oxydation sont la goethite G pour le processus lent et l'oxyhydroxycarbonate GR* pour l'oxydation vigoureuse. Diffraction des rayons X et spectrométrie Mössbauer sont en plein accord. En outre, on observe que la goethite est superparamagnétique c'est-à-dire avec de très petits cristaux.

Cette étude permet de démontrer que la cinétique d'oxydation in situ est beaucoup plus rapide que l'oxydation plus traditionnelle et qu'elle peut s'effectuer avec simplement de l'air.

## Revendications

1. Procédé permettant de réduire une substance S en une substance S_{réduit} comprenant :
• la mise en présence d'un hydroxyde double lamellaire (HDL), en tant que catalyseur ou précurseur dudit catalyseur de même structure cristalline que celle dudit catalyseur, ledit HDL comportant un cation bivalent M²⁺ partiellement ou totalement substitué par Fe^{II}, et un cation trivalent T éventuellement substitué par Fe^{III}, de formule générale suivante :
[M²⁺_{(z)}Fe^{II}_{(1-y-z)}T³⁺ₜFe^{III}_{(y-t)}O₂H₂]ⁿ⁺[(y/n)Aⁿ⁻,mH₂O]^{n-⁻}, dans
laquelle •
1/4 <y<1/3, z<l-y et t<y, Aⁿ⁻ est un anion de charge n, n prenant les valeurs 1, 2 ou 3, notamment 2, m est un nombre entier variant de 1 à 10, notamment de 1 à 4, avantageusement 3,
et le rapport x = (y-t)/(1-z-t) varie de 0 à 1,
ledit HDL étant utilisé en association avec des bactéries ferriréductrices susceptibles de réduire Fe^{III} en Fe^{II} et en présence de matière organique,
• si x est supérieur à 0,66 à l'instant initial, une phase de mise en régime du procédé d'oxydoréduction correspondant à la réduction du Fe^{III} en Fe^{II} au sein dudit HDL par lesdites bactéries ferri-réductrices, entraînant une variation de x jusqu'à une valeur inférieure ou égale à 0,66, pour obtenir ledit HDL sous forme de catalyseur, sans modification substantielle de la structure cristalline dudit HDL,
• une phase de réduction catalytique de la substance S, ajoutée à l'ensemble comprenant le HDL, les bactéries et la matière organique, en une substance S_{réduit} par oxydation du Fe^{II} en Fe^{III} au sein dudit HDL couplée à une étape d'oxydation catalytique de la matière organique par réduction du Fe^{III} en Fe^{II}, le potentiel rédox du couple S_{réduit} /S étant supérieur à celui du couple Fe^{III}/Fe^{II} aux sites cristallographiques du Fe^{II},
ledit HDL est en association avec un métal choisi parmi Cu(II), Ag(I), Cd(II), Ni(II), Hg(II), Pb(II) et Mn(II), préférentiellement Cu(II), en proportion d'environ 2 à 20% (m/m) par rapport au Fe total,
ladite mise en présence d'un HDL avec des bactéries ferri-réductrices susceptibles de réduire Fe^{III} en Fe^{II} en présence de matière organique ayant lieu sans dissolution du précurseur suivie d'une reprécipitation du catalyseur ;
ledit Fe^{II} étant régénéré à partir de Fe^{III} et réciproquement, de manière " cyclique continu " tant qu'il n'y a pas épuisement de la substance S, de la matière organique et / ou tant que les bactéries ferri-réductrices restent activent.

2. Procédé permettant de réduire une substance S en une substance S_{réduit} selon la revendication 1, dans lequel, dans lequel la proportion de Fe^{II} substituant l'élément bivalent est comprise de 1 % (m/m) à 100 % (m/m) par rapport à la quantité totale d'élément bivalent.

3. Procédé permettant de réduire une substance S en une substance S_{réduit} selon la revendication 1 ou 2, dans lequel la proportion de Fe^{III} dans l'élément trivalent est comprise de 0 % (m/m) à 100 % (m/m) par rapport à la quantité totale d'élément trivalent.

4. Procédé permettant de réduire une substance S en une substance S_{réduit} selon l'une quelconque des revendications 1 à 3, dans laquelle M²⁺ est choisi parmi Mg⁺, Ni²⁺, Ca²⁺, Mn²⁺ et T³⁺ est parmi Al³⁺, Cr³⁺.

5. Procédé permettant de réduire une substance S en une substance S_{réduit} selon la revendication 1, dans lequel ledit HDL est sous la forme d'un oxyhydroxysel ferreux ferrique et comprenant:
• la mise en présence dudit oxyhydroxysel ferreux ferrique, en tant que catalyseur ou précurseur dudit catalyseur de même structure cristalline que celle dudit catalyseur, ayant la formule
[Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻
dans laquelle Aⁿ⁻ est un anion de charge n, n prenant les valeurs 1, 2 ou 3, notamment 2, m est un nombre entier variant de 1 à 10, notamment de 1 à 4, avantageusement 3 et x est compris de 0 à 1 à l'instant initial, avec des bactéries ferri-réductrices susceptibles de réduire le Fe^{III} en Fe^{II} et de la matière organique,
• si x est supérieur à 0,66 à l'instant initial, une phase de mise en régime du procédé d'oxydoréduction correspondant à la réduction du Fe^{III} en Fe^{II} au sein dudit oxyhydroxysel ferreux ferrique par lesdites bactéries ferri-réductrices, entraînant une variation de x jusqu'à une valeur inférieure ou égale à 0,66, pour obtenir ledit oxyhydroxysel ferreux ferrique sous forme de catalyseur, sans modification substantielle de la structure cristalline dudit oxyhydroxysel ferreux ferrique,
• une phase de réduction catalytique de la substance S, ajoutée à l'ensemble comprenant l'oxyhydroxysel ferreux ferrique, les bactéries et la matière organique, en une substance S_{réduit} par oxydation du Fe^{II} en Fe^{III} au sein dudit oxyhydroxysel ferreux ferrique couplée à une étape d'oxydation catalytique de la matière organique par réduction du Fe^{III} en Fe^{II}, le potentiel rédox du couple S_{réduit}/S étant supérieur à celui du couple Fe^{III}/Fe^{II} aux sites cristallographiques du Fe^{II}.

6. Procédé permettant de réduire une substance S en une substance S_{réduit} selon l'une des revendications 1 à 5, dans lequel ledit HDL est en association avec des ions phosphates en proportion d'au moins 1%.

7. Procédé permettant de réduire une substance S en une substance S_{réduit} selon la revendication 1, dans lequel ledit HDL est un précurseur de catalyseur.

8. Procédé permettant de réduire une substance S en une substance S_{réduit} selon la revendication 5, dans lequel ledit oxyhydroxysel ferreux ferrique est un précurseur de catalyseur.

9. Procédé permettant de réduire une substance S en une substance selon l'une des revendications 7 à 8, dans lequel ledit HDL est en association avec des ions phosphates en proportion d'au moins 1%.

10. Procédé selon l'une des revendication 7 à 9, dans lequel x est égal à 1 à l'instant initial avant mise en régime du procédé d'oxydoréduction.

11. Procédé selon l'une des revendications 1 à 10, lequel procédé a lieu en conditions d'anoxie.

12. Procédé selon l'une des revendications 1 à 11, dans lequel l'anion est choisi parmi le carbonate, chlorure, sulfate, fluorure, iodure, oxalate, méthanoate, notamment le carbonate.

13. Procédé selon l'une des revendications 1 à 12, dans lequel la substance S est choisie parmi des polluants minéraux tels que le nitrate, séléniate, chromate, arséniate ou parmi des polluants organiques notamment des produits phytosanitaires.

14. Procédé selon l'une des revendications 1 à 13, dans lequel les bactéries sont choisies parmi Shewanella putrefaciens, Geobacter sp.

15. Procédé selon l'une des revendications 1 à 14, dans lequel l'oxyhydroxysel ferreux ferrique est préparé par synthèse bactérienne, comprenant :
la culture de bactéries ferri-réductrices en conditions d'anoxie dans un milieu approprié comprenant.
• Fe^{III}, en particulier sous la forme d'un oxyhydroxyde ou d'un oxyhydroxysel ferrique de formule [Fe^{III}₃ₙO₆ₙH₄ₙ]ⁿ⁺[Aⁿ⁻,mH₂O]ⁿ⁻
• de la matière organique, notamment du méthanoate HCO₂⁻,
• un anion Aⁿ⁻ si l'anion n'est pas HCO₃⁻,
afin d'obtenir un l'oxyhydroxysel ferreux ferrique dans lequel x varie dans la gamme allant de 0,33 à 0,66.

## Patentansprüche

1. Verfahren, welches die Reduktion einer Substanz S zu einer Substanz_{reduziert} gestattet, umfassend:
• Inberührungbringen eines geschichteten Doppelhydroxids (HDL) als Katalysator oder Vorläufer des Katalysators mit derselben kristallinen Struktur wie jener des Katalysators, wobei das HDL umfasst: ein zweiwertiges Kation M²⁺, das teilweise oder zur Gänze durch Fe^{II} substituiert ist, und ein dreiwertiges Kation T, das gegebenenfalls durch Fe^{III} substituiert ist, mit der folgenden allgemeinen Formel:
[M²⁺_{(z)}Fe^{II}_{(1-y-z)}T³⁺ₜFe^{III}_{(y-t)}O₂H₂]ⁿ⁺[(y/n)Aⁿ⁻,mH₂O]ⁿ⁻
wobei
1/4<y<1/3, z<1-y und t<y, Aⁿ⁻ ein Anion mit der Ladung n ist, n die Werte 1, 2 oder 3, insbesondere 2, annimmt, m eine ganze Zahl ist, die von 1 bis 10, insbesondere von 1 bis 4 variiert, vorteilhaft 3,
und das Verhältnis x = (y-t)/(1-z-t) von 0 bis 1 variiert,
das HDL in Assoziation mit ferri-reduzierenden Bakterien, die Fe^{III} zu Fe^{II} reduzieren können, und in Anwesenheit von organischem Material verwendet wird,
• wenn x größer ist als 0,66 zur Anfangszeit, eine Phase der Anwendung des Verfahrens zur Oxyreduktion, die der Reduktion von Fe^{III} zu Fe^{II} im Inneren des HDL durch die ferri-reduzierenden Bakterien entspricht, was zu einer Variation von x bis zu einem Wert kleiner oder gleich 0,66 führt, um das HDL in der Form eines Katalysators zu erhalten, ohne wesentliche Modifikation der kristallinen Struktur des HDL,
• eine Phase der katalytischen Reduktion der Substanz S, die der Gesamtheit, umfassend das HDL, die Bakterien und das organische Material, zugesetzt wird, zu einer Substanz_{reduziert} durch Oxidation von Fe^{II} zu Fe^{III} im Inneren des HDL, gekoppelt mit einem Schritt der katalytischen Oxidation des organischen Materials durch Reduktion von Fe^{III} zu Fe^{II}, wobei das Redox-Potential des Paars Substanz_{reduziert} / S größer ist als jenes des Paars Fe^{III} / Fe^{II} an den kristallografischen Orten von Fe^{II},
wobei das HDL in Assoziation mit einem Metall ist, das ausgewählt wird aus Cu(II), Ag(I), Cd(II), Ni(II), Hg(II), Pb(II) und Mn(II), vorzugsweise Cu(II), in einem Anteil von ungefähr 2 bis 20 % (m/m) im Verhältnis zu dem gesamten Fe,
wobei das Inberührungbringen eines HDL mit den ferri-reduzierenden Bakterien, die Fe^{III} zu Fe^{II} reduzieren können, in Anwesenheit von organischem Material ohne Lösen des Vorläufers stattfindet, gefolgt von einer erneuten Fällung des Katalysators;
wobei das Fe^{II} aus Fe^{III} regeneriert wird und umgekehrt, auf kontinuierliche cyclische Weise, solange es zu keiner Erschöpfung der Substanz S, des organischen Materials kommt und/oder solange die ferri-reduzierenden Bakterien aktiv bleiben.

2. Verfahren, welches die Reduktion einer Substanz S zu einer Substanz_{reduziert} gestattet, nach Anspruch 1, wobei der Anteil von Fe^{II}, der das zweiwertige Element substituiert, zwischen 1 % (m/m) bis 100 % (m/m) im Verhältnis zur Gesamtmenge des zweiwertigen Elements liegt.

3. Verfahren, welches die Reduktion einer Substanz S zu einer Substanz_{reduziert} gestattet, nach Anspruch 1 oder 2, wobei der Anteil an Fe^{III} in dem dreiwertigen Element zwischen 0 % (m/m) bis 100 % (m/m) im Verhältnis zur Gesamtmenge des dreiwertigen Elements liegt.

4. Verfahren, welches die Reduktion einer Substanz S zu einer Substanz_{reduziert} gestattet, nach einem der Ansprüche 1 bis 3, wobei M²⁺ ausgewählt wird aus Mg⁺, Ni²⁺, Ca²⁺, Mn²⁺ und T³⁺ aus Al³⁺, Cr³⁺.

5. Verfahren, welches die Reduktion einer Substanz S zu einer Substanz_{reduziert} gestattet, nach Anspruch 1, wobei das HDL in der Form eines eisenhaltigen Ferrioxyhydroxysalzes ist, und umfassend:
• Inberührungbringen des eisenhaltigen Ferrioxyhydroxysalzes als Katalysator oder Vorläufer des Katalysators mit derselben kristallinen Struktur wie jener des Katalysators, mit der Formel:
[Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻
wobei Aⁿ⁻ ein Anion mit der Ladung n ist, n die Werte 1, 2 oder 3, insbesondere 2, annimmt, m eine ganze Zahl ist, die von 1 bis 10, insbesondere von 1 bis 4 variiert, vorteilhaft 3, und x zwischen 0 bis 1 zur Anfangszeit liegt, mit den ferri-reduzierenden Bakterien, die Fe^{III} zu Fe^{II} reduzieren können, und dem organischen Material,
• wenn x größer ist als 0,66 zur Anfangszeit, eine Phase der Anwendung des Verfahrens zur Oxyreduktion, die der Reduktion von Fe^{III} zu Fe^{II} im Inneren des eisenhaltigen Ferrioxyhydroxysalzes durch die ferri-reduzierenden Bakterien entspricht, was zu einer Variation von x bis zu einem Wert kleiner oder gleich 0,66 führt, um das eisenhaltige Ferrioxyhydroxysalz in der Form eines Katalysators zu erhalten, ohne wesentliche Modifikation der kristallinen Struktur des eisenhaltigen Ferrioxyhydroxysalzes,
• eine Phase der katalytischen Reduktion der Substanz S, die der Gesamtheit, umfassend das eisenhaltige Ferrioxyhydroxysalz, die Bakterien und das organische Material, zugesetzt wird, zu einer Substanz_{reduziert} durch Oxidation von Fe^{II} zu Fe^{III} im Inneren des eisenhaltigen Ferrioxyhydroxysalzes, gekoppelt mit einem Schritt der katalytischen Oxidation des organischen Materials durch Reduktion von Fe^{III} zu Fe^{II}, wobei das Redox-Potential des Paars Substanz_{reduziert} / S größer ist als jenes des Paars Fe^{III} / Fe^{II}, an den kristallografischen Orten von Fe^{II}.

6. Verfahren, welches die Reduktion einer Substanz S zu einer Substanz_{reduziert} gestattet, nach einem der Ansprüche 1 bis 5, wobei das HDL in Assoziation mit Phosphationen in einem Anteil von mindestens 1 % ist.

7. Verfahren, welches die Reduktion einer Substanz S zu einer Substanz_{reduziert} gestattet, nach Anspruch 1, wobei das HDL ein Katalysatorvorläufer ist.

8. Verfahren, welches die Reduktion einer Substanz S zu einer Substanz_{reduziert} gestattet, nach Anspruch 5, wobei das eisenhaltige Ferrioxyhydroxysalz ein Katalysatorvorläufer ist.

9. Verfahren, welches die Reduktion einer Substanz S zu einer Substanz_{reduziert} gestattet, nach einem der Ansprüche 7 bis 8, wobei das HDL in Assoziation mit Phosphationen in einem Anteil von mindestens 1 % ist.

10. Verfahren nach einem der Ansprüche 7 bis 9, wobei x gleich 1 ist zur Anfangszeit vor der Anwendung des Verfahrens zur Oxyreduktion.

11. Verfahren nach einem der Ansprüche 1 bis 10, wobei das Verfahren unter Anoxiebedingungen stattfindet.

12. Verfahren nach einem der Ansprüche 1 bis 11, wobei das Anion ausgewählt wird aus Carbonat, Chlorid, Sulfat, Fluorid, Iodid, Oxalat, Methanoat, insbesondere Carbonat.

13. Verfahren nach einem der Ansprüche 1 bis 12, wobei die Substanz S ausgewählt ist aus mineralischen Schadstoffen, wie Nitrat, Seleniat, Chromat, Arseniat, oder aus organischen Schadstoffen, insbesondere phytosanitären Produkten.

14. Verfahren nach einem der Ansprüche 1 bis 13, wobei die Bakterien aus Shewanella putrefaciens, Geobacter sp. ausgewählt werden.

15. Verfahren nach einem der Ansprüche 1 bis 14, wobei das eisenhaltige Ferrioxyhydroxysalz durch bakterielle Synthese hergestellt wird, umfassend:
die Kultur von ferri-reduzierenden Bakterien unter Anoxiebedingungen in einem geeigneten Medium, umfassend:
• Fe^{III}, insbesondere in der Form eines Oxyhydroxids oder eines Ferri-Oxyhydroxysalzes mit der Formel [Fe^{III}₃ₙO₆ₙH₄ₙ]ⁿ⁺ [Aⁿ⁻,mH₂O]ⁿ⁻,
• organisches Material, insbesondere Methanoat HCO₂⁻,
• ein Anion Aⁿ⁻, wenn das Anion nicht HCO₃⁻ ist,
um ein eisenhaltiges Ferri-Oxyhodroxysalz zu erhalten, wobei x in dem Bereich von 0,33 bis 0,66 variiert.

## Claims

1. Process permitting the reduction of a substance S into a substance S_{reduced} comprising:
• bringing together a lamellar double hydroxide (LDH), as catalyst or precursor of said catalyst with the same crystalline structure as that of said catalyst,
said LDH containing a divalent cation M²⁺ partially or completely substituted by Fe^{II}, and a trivalent cation T optionally substituted by Fe^{III}, of the following general formula:
[M²⁺_{(z)}Fe^{II}_{(1-y-z)}T³⁺ₜFe^{II}_{(y-t)}O₂H₂]ⁿ⁺[(y/n)Aⁿ⁻,mH₂O]ⁿ⁻
in which:
1/4 <y<1/3, z<1-y and t<y, Aⁿ⁻ is an anion with charge n, n taking the values 1, 2 or 3, in particular 2, m is an integer varying from 1 to 10, in particular from 1 to 4, advantageously 3,
and the ratio x = (y-t)/(1-z-t) varies from 0 to 1,
said LDH being used in association with iron-reducing bacteria able to reduce Fe^{III} to Fe^{II} and in the presence of organic matter,
• if x is greater than 0.66 at the initial moment, a start-up phase of the oxidation-reduction process corresponding to the reduction of Fe^{III} to Fe^{II} within said LDH by said iron-reducing bacteria, leading to a change in x to a value less than or equal to 0.66, in order to obtain said LDH in the form of a catalyst, without a substantial change in the crystalline structure of said LDH,
• a phase of catalytic reduction of the substance S, added to the whole comprising the LDH, the bacteria and the organic matter, to a substance S_{reduced} by oxidation of Fe^{II} to Fe^{III} within said LDH coupled to a step of catalytic oxidation of the organic matter by reduction of the Fe^{III} to Fe^{II}, the redox potential of the pair S_{reduced}/S being greater than that of the pair Fe^{III}/Fe^{II} at the crystallographic sites of the Fe^{II},
said LDH is in association with a metal chosen from cu(II), Ag(I), Cd(II), Ni(II), Hg(II), Pd(II) and Mn(II), preferably Cu(II), in a proportion from about 2 to 20% (w/w) relative to the total Fe,
said bringing together of an LDH with iron reducing bacteria susceptible to reduce Fe^{III} to Fe^{II} in the presence of organic matter taking place without solubilisation of the precursor followed by reprecipitation of the precursor;
said Fe^{II} being regenerated starting from Fe^{III} et inversely, in a "cyclic continuous" manner, so long as there is no depletion of the substance S, the organic matter, and/or for as long as the iron-reducing bacteria remain active.

2. Process permitting the reduction of a substance S to a substance S_{reduced} according to claim 1, in which the proportion of Fe^{II} substituted by the bivalent element is comprised from 1% (w/w) to 100% (w/w) with respect to the total amount of bivalent element.

3. Process permitting the reduction of a substance S to a substance S_{reduced} according to claim 1 or 2, in which the proportion of Fe^{III} in the trivalent element is comprised form 0% (w/w) to 100% (w/w) with respect to the total amount of trivalent element.

4. Process permitting the reduction of a substance S to a substance S_{reduced} according to any one of claims 1 to 3, in which M²⁺ is chosen from Mg⁺, Ni²⁺, Ca²⁺, Mn²⁺ and T³⁺ is from Al³⁺ and Cr³⁺.

5. Process permitting the reduction of a substance S to a substance S_{reduced} according to claim 1, in which said LDH is in the form of a ferrous-ferric oxyhydroxy salt and comprising:
- bringing together said ferrous-ferric oxyhydroxy salt, as a catalyst or precursor of said catalyst with the same crystalline structure as that of said catalyst, having the formula
[Fe^{II}₃ₙ₍₁₋ₓ₎Fe^{III}₃ₙₓO₆ₙHₙ₍₇₋₃ₓ₎]ⁿ⁺[Aⁿ⁻,mH₂O]ⁿ⁻
in which Aⁿ⁻ is an anion with charge n, n having the values 1, 2 or 3, in particular 2, m is an integer varying from 1 to 10, in particular from 1 to 4, advantageously 3 and x is comprised from 0 to 1 at the initial moment, with iron-reducing bacteria that are able to reduce the Fe^{III} to Fe^{II} and organic matter,
- if x is greater than 0.66 at the initial moment, a start-up phase of the oxidation-reduction process corresponding to the reduction of Fe^{III} to Fe^{II} within said ferrous-ferric oxyhydroxy salt by said iron-reducing bacteria, leading to a change in x to a value less than or equal to 0.66, in order to obtain said ferrous-ferric oxyhydroxy salt in the form of a catalyst, without a substantial change in the crystalline structure of said ferrous-ferric oxyhydroxy salt,
- a phase of catalytic reduction of the substance S, added to the whole comprising the ferrous-ferric oxyhydroxy salt, the bacteria and the organic matter, to a substance S_{reduced} by oxidation of the Fe^{II} to Fe^{III} within said ferrous-ferric oxyhydroxy salt coupled to a step of catalytic oxidation of the organic matter by reduction of the Fe^{III} to Fe^{II},
the redox potential of the pair S_{reduced}/S being greater than that of the pair Fe^{III}/Fe^{II} at the crystallographic sites of the Fe^{II}.

6. Process permitting the reduction of a substance S to a substance S_{reduced} according to any one of claims 1 to 5, in which said LDH is used in association with phosphate ions in a proportion of at least 1%.

7. Process permitting the reduction of a substance S to a substance S_{reduced} according to claim 1, in which said LDH is a catalyst precursor.

8. Process permitting the reduction of a substance S to a substance S_{reduced} according to claim 5, in which said ferrous-ferric oxyhydroxy salt is a catalyst precursor.

9. Process permitting the reduction of a substance S to a substance S_{reduced} according to any one of claims 7 to 8, in which said LDH is used in association with phosphate ions in a proportion of at least 1%.

10. Process according to any one of claims 7 to 9, in which x is equal to 1 at the initial moment before the start-up of the oxidation-reduction process.

11. Process according to any one of claims 1 to 10, said process taking place under conditions of anoxia.

12. Process according to any one of claims 1 to 11, in which the anion is selected from carbonate, chloride, sulphate, fluoride, iodide, oxalate, methanoate, in particular carbonate.

13. Process according to any one of claims 1 to 12, in which the substance S is selected from inorganic pollutants such as nitrate, selenate, chromate, arsenate or from organic pollutants, in particular plant protection products.

14. Process according to any one of claims 1 to 13, in which the bacteria are selected from *Shewanella putrefaciens, Geobacter sp.*

15. Process according to any one of claims 1 to 14, in which the ferrous-ferric oxyhydroxy salt is prepared by bacterial synthesis, comprising:
the culture of iron-reducing bacteria under conditions of anoxia in a suitable medium comprising:
- Fe^{III}, in particular in the form of an oxyhydroxide or a ferric oxyhydroxy salt of formula [Fe^{III}₃ₙO₆ₙH₄ₙ]ⁿ⁺[Aⁿ⁻,mH₂O]ⁿ⁻,
- organic matter, in particular methanoate HCO₂⁻,
- an anion Aⁿ⁻ if the anion is not HCO₃⁻,
in order to obtain a ferrous-ferric oxyhydroxy salt in which x varies in the range from 0.33 to 0.66.
